# EUROPEAN PATENT APPLICATION

(11) **EP 4 645 886 A1**
(43) Date of publication of application: **05.11.2025**
(21) Application number: 22970254.3
(22) Date of filing: 29.12.2022
(51) Int. Cl.: H04N 21/482, H04N 21/422, H04N 21/431, H04N 21/81

(54) **IMAGE DISPLAY DEVICE AND OPERATING METHOD THEREOF**

(71) Applicant: LG Electronics Inc., Yeongdeungpo-gu Seoul 07336 (KR)
(72) Inventor: BYEON, Yeongbin, Seoul 06772 (KR); LEE, Jaekyung, Seoul 06772 (KR); KIM, Yongtae, Seoul 06772 (KR); CHOI, Yookyoung, Seoul 06772 (KR); LEE, Hyangjin, Seoul 06772 (KR); CHANG, Jeean, Seoul 06772 (KR); SON, Myeongok, Seoul 06772 (KR)
(74) Representative: Vossius & Partner Patentanwälte Rechtsanwälte mbB
(86) International application number: PCT/KR2022/021613
(87) International publication number: WO 2024/143615

(57) **Abstract**

The present disclosure relates to a **display device** and an operating method thereof. A **display device** according to an embodiment includes a display, a network interface unit for communicating with at least one server, a memory for storing at least one database, and a controller. The controller is configured to transmit, to the server, data regarding a result of searching for content according to a specific keyword via a specific application. Based on receiving a predetermined input related to the specific application, the controller transmits a first keyword, extracted from a database corresponding to the specific application, to the server. Based on receiving a second keyword associated with the first keyword from the server, the controller outputs a screen including at least one recommended keyword corresponding to the second keyword. The search result includes at least one first channel providing the searched content, and if the first keyword includes the specific keyword, the second keyword may include at least one of the at least one first channel. Various other embodiments are also possible.

## Description

### [TECHNICAL FIELD]

The present disclosure relates to a display device and an operating method thereof.

### [BACKGROUND ART]

A display device is a device equipped with a function to display a video that a user can watch, and a user can watch broadcasts through the display device. For example, the display device may include a Television (TV), a monitor, a projector, etc., equipped with a Liquid Crystal Display (LCD) using liquid crystals or an Organic Light Emitting Diode (OLED) display using OLEDs.

Recently, digital TV services using wired or wireless communication networks have become widespread, and these digital TV services provide various services that were not available in conventional analog broadcast services.

Conventionally, a Content Provider (CP) recommends the latest content or popular content watched by many other users, or recommends web content related to the TV broadcast content that the user is currently watching. However, the content recommended through such conventional methods often differs somewhat from the user's preferences.

Furthermore, the display device may internally collect a user's usage history and, based on the usage history, recommend content or keywords to the user. However, when there are multiple applications installed on the display device for outputting content, there is a problem in that it is difficult to recommend content or keywords optimized for each individual application.

### [SUMMARY OF THE INVENTION]

An object of the present disclosure is to solve the aforementioned problems and other problems.

Another object is to provide a display device and an operating method thereof that can more quickly and accurately recommend keywords for content that a user is highly likely to prefer, based on the user's usage history, without concerns about personal information leakage.

Another object is to provide a display device and an operating method thereof that can recommend keywords optimized for each of a plurality of applications.

Another object is to provide a display device and an operating method thereof that can recommend keywords optimized for a user by using the results of searching for content based on a keyword.

Another object is to provide an display device and an operating method thereof that can recommend keywords optimized for a user by considering the association between channels that provide content.

To achieve the above objects, a display device according to an embodiment of the present disclosure includes: a display; a network interface unit configured to perform communication with at least one server; a memory configured to store at least one database; and a controller. The controller is configured to: transmit, via the network interface unit, data regarding a result of searching for content according to a specific keyword through a specific application to the server; based on receiving a predetermined input related to the specific application, transmit a first keyword, extracted from data included in a database corresponding to the specific application, to the server via the network interface unit; and based on a second keyword associated with the first keyword being received from the server via the network interface unit, output, via the display, a screen including at least one recommended keyword corresponding to the received second keyword. The result of searching for the content includes at least one first channel that provides content items searched according to the specific keyword, and when the first keyword includes the specific keyword, the second keyword may include at least one of the at least one first channel.

To achieve the above objects, an operating method of a display device according to an embodiment of the present disclosure includes: transmitting, to a server, data regarding a result of searching for content according to a specific keyword through a specific application; based on receiving a predetermined input related to the specific application, transmitting a first keyword, extracted from data included in a database corresponding to the specific application, to the server; and based on at least one second keyword associated with the first keyword being received from the server, outputting a screen including at least one recommended keyword corresponding to the received second keyword. The result of searching for the content includes at least one first channel that provides content items searched according to the specific keyword, and when the first keyword includes the specific keyword, the second keyword may include at least one of the at least one first channel.

The effects of the display device and the operating method thereof according to the present disclosure are as follows.

According to various embodiments of the present disclosure, it is possible to more quickly and accurately recommend keywords for content that a user is highly likely to prefer, based on the user's usage history, without concerns about personal information leakage.

Furthermore, according to various embodiments of the present disclosure, it is possible to recommend keywords optimized for each of a plurality of applications.

Furthermore, according to various embodiments of the present disclosure, it is possible to recommend keywords optimized for a user by using the results of searching for content based on a keyword.

Furthermore, according to various embodiments of the present disclosure, it is possible to recommend keywords optimized for a user by considering the association between channels that provide content.

Further scope of applicability of the present disclosure will become apparent from the detailed description given hereinafter. However, it should be understood that the detailed description and specific examples, while indicating preferred embodiments of the disclosure, are given by way of illustration only, since various changes and modifications within the spirit and scope of the disclosure will become apparent to those skilled in the art from this detailed description.

### [BRIEF DESCRIPTION OF THE DRAWINGS]

FIG. 1 is a diagram illustrating a system according to an embodiment of the present disclosure.
FIG. 2 is an internal block diagram of the display device of FIG. 1
. FIG. 3 is an internal block diagram of the controller of FIG. 2
FIG. 4 is a diagram illustrating a control method of the remote control device of FIG. 2
FIG. 5 is an internal block diagram of the remote control device of FIG. 2.
FIGS. 6 and 7 are internal block diagrams of the server of FIG. 1.
FIGS. 8a to 10 are flowcharts illustrating an operating method of a display device according to an embodiment of the present disclosure.
FIGS. 11 to 18 are diagrams referred to for explaining the operation of a display device according to an embodiment of the present disclosure.
FIG. 19 is a flowchart illustrating an operating method of a system according to an embodiment of the present disclosure.
FIG. 21 is a flowchart illustrating an operating method of a server according to an embodiment of a present disclosure.

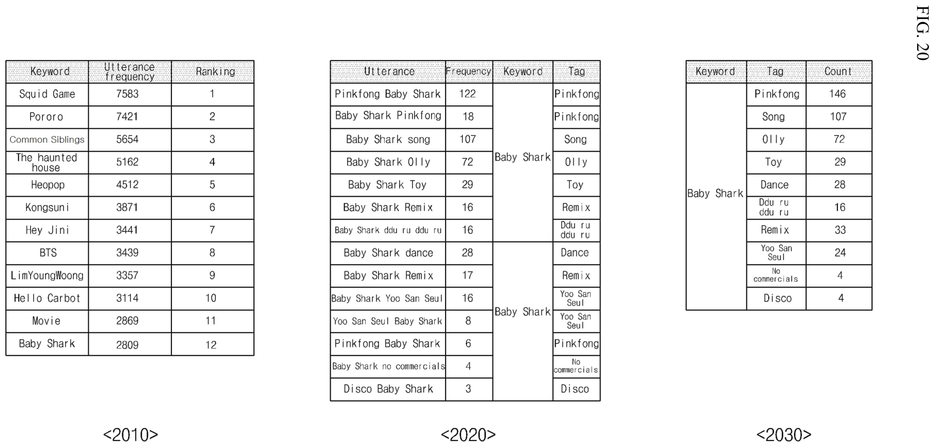

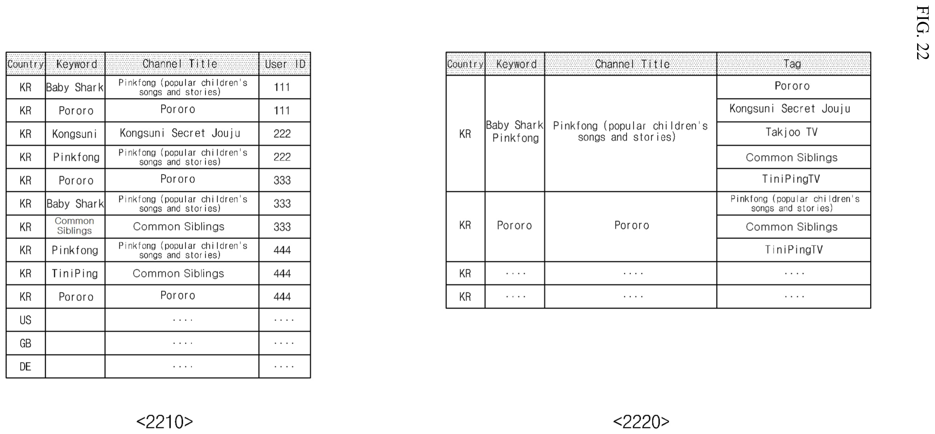

FIGS. 20 and 22 are diagrams referred to for explaining the operation of a server according to an embodiment of the present disclosure.
. .

### [DETAILED DESCRIPTION OF THE INVENTION]

Hereinafter, the present disclosure will be described in detail with reference to the accompanying drawings. In the drawings, illustration of parts not related to the description is omitted to clearly and concisely explain the present disclosure, and the same or very similar parts are denoted by the same reference numerals throughout the specification.

The suffixes "module" and "unit" for components used in the following description are given merely for ease of drafting the specification, and do not in themselves impart any particularly important meaning or role. Accordingly, the "module" and "unit" may be used interchangeably.

In the present application, terms such as "comprise" or "have" are intended to specify the presence of stated features, numbers, steps, operations, components, parts, or combinations thereof, but they should be understood as not precluding the presence or addition of one or more other features, numbers, steps, operations, components, parts, or combinations thereof.

Furthermore, in this specification, terms such as "first" and "second" may be used to describe various elements, but these elements are not limited by these terms. These terms are used only to distinguish one element from another.

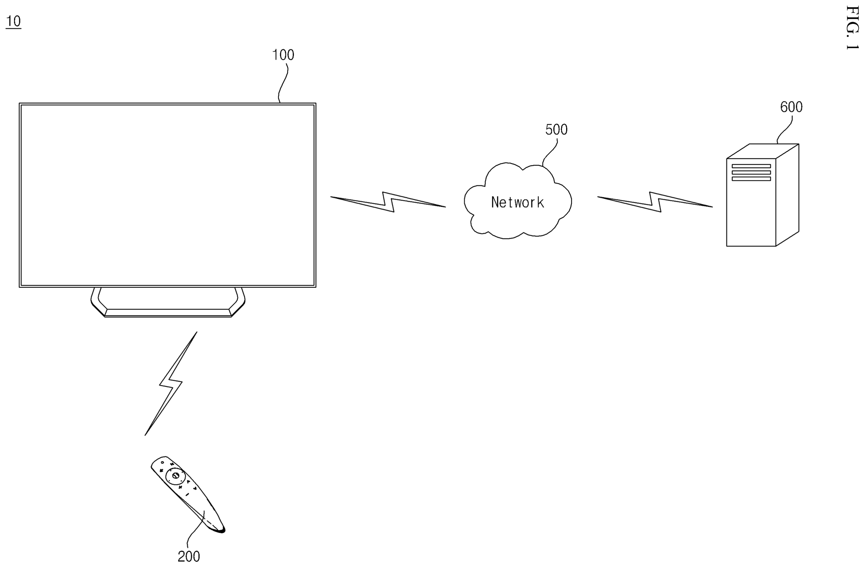

FIG. 1 is a diagram illustrating a system according to various embodiments of the present disclosure.

Referring to FIG. 1, a system (10) may include a display device (100) and/or a remote control device (200).

The display device (100) may be a device that processes and outputs an image. The display device (100) is not particularly limited as long as it can output a screen corresponding to a video signal, such as a TV, a notebook computer, a monitor, etc.

The display device (100) may receive a broadcast signal, process the signal, and output a signal-processed broadcast video. When the display device (100) receives a broadcast signal, the display device (100) may correspond to a broadcast receiving device.

The display device (100) may receive a broadcast signal wirelessly through an antenna or receive a broadcast signal via a wired cable. For example, the display device (100) may receive a terrestrial broadcast signal, a satellite broadcast signal, a cable broadcast signal, an Internet Protocol Television (IPTV) broadcast signal, etc.

The remote control device (200) may be connected to the display device (100) in a wired and/or wireless manner and may provide various control signals to the display device (100). In this case, the remote control device (200) may establish a wired or wireless network with the display device (100) and, through the established network, transmit various control signals to the display device (100) or receive signals related to various operations processed in the display device (100) from the display device (100).

For example, various input devices such as a mouse, a keyboard, a spatial remote controller, a trackball, a joystick, etc., may be used as the remote control device (200). The remote control device (200) may be referred to as an external device, and hereinafter, it is disclosed in advance that the external device and the remote control device may be used interchangeably as needed.

The display device (100) may be connected to only a single remote control device (200), or simultaneously connected to two or more remote control devices (200), and based on the control signals provided from each remote control device (200), may change an object displayed on the screen or adjust the state of the screen.

Meanwhile, the system (10) may further include at least one server (600). The display device (100) may transmit and receive data to and from the server (600). For example, the display device (100) may transmit and receive data with the server (600) via a network (500) such as the Internet.

The display device (100) may transmit data related to an operation performed according to a user input to the server (600). The server (600) may store the data received from the display device (100). The server (600) may transmit the result of processing the data received from the display device (100) to the display device (100).

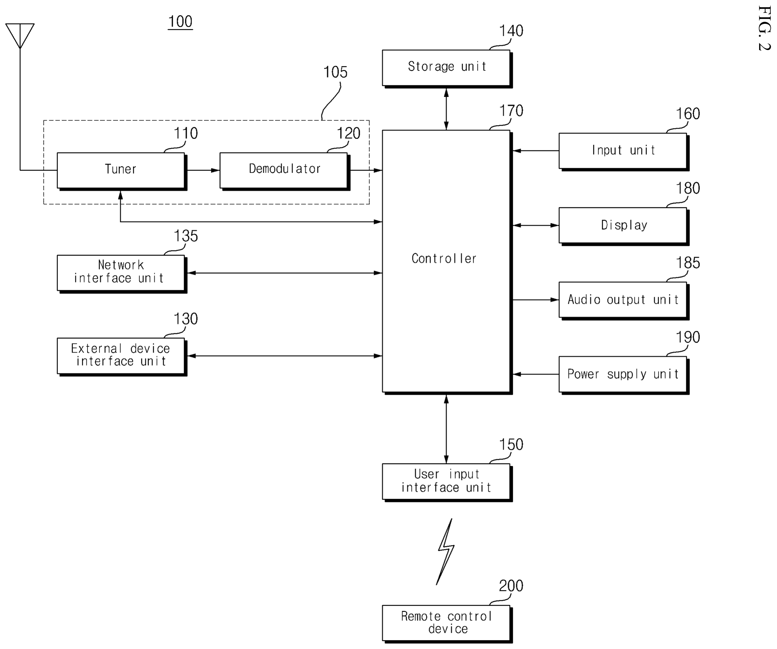

FIG. 2 is an internal block diagram of the display device of FIG. 1.

Referring to FIG. 2, the display device (100) may include a broadcast receiving unit (105), an external device interface unit (130), a network interface unit (135), a storage unit (140), a user input interface unit (150), an input unit (160), a controller (170), a display (180), an audio output unit (185), and/or a power supply unit (190).

The broadcast receiving unit (105) may include a tuner unit (110) and a demodulating unit (120).

Meanwhile, unlike the drawing, the display device (100) may include only the broadcast receiving unit (105) and the external device interface unit (130) among the broadcast receiving unit (105), the external device interface unit (130), and the network interface unit (135). That is, the display device (100) may not include the network interface unit (135).

The tuner unit (110) may select a broadcast signal corresponding to a channel selected by the user or all pre-stored channels from among the broadcast signals received through an antenna (not shown) or a cable (not shown). The tuner unit (110) may convert the selected broadcast signal into an intermediate frequency signal or a baseband video or audio signal.

For example, if the selected broadcast signal is a digital broadcast signal, the tuner unit (110) may convert it into a digital IF signal (DIF), and if it is an analog broadcast signal, it may convert it into an analog baseband video or audio signal (CVBS/SIF). That is, the tuner unit (110) can process a digital broadcast signal or an analog broadcast signal. The analog baseband video or audio signal (CVBS/SIF) output from the tuner unit (110) may be directly input to the controller (170).

Meanwhile, the tuner unit (110) may sequentially select the broadcast signals of all broadcast channels stored through a channel memory function and convert them into an intermediate frequency signal or a baseband video or audio signal.

Meanwhile, the tuner unit (110) may be equipped with a plurality of tuners to receive broadcast signals of multiple channels. Alternatively, a single tuner that simultaneously receives broadcast signals of multiple channels is also possible.

The demodulating unit (120) may receive the digital IF signal (DIF) converted in the tuner unit (110) and perform a demodulation operation.

The demodulating unit (120) may perform demodulation and channel decoding and then output a stream signal (TS). At this time, the stream signal may be a signal in which a video signal, an audio signal, or a data signal is multiplexed.

The stream signal output from the demodulating unit (120) may be input to the controller (170). The controller (170) may perform demultiplexing, video/audio signal processing, etc., and then output video through the display (180) and output audio through the audio output unit (185).

The external device interface unit (130) may transmit or receive data with a connected external device. For this purpose, the external device interface unit (130) may include an A/V input/output unit (not shown).

The external device interface unit (130) can be connected via a wired/wireless connection to external devices such as a DVD (Digital Versatile Disk), Blu-ray, game console, camera, camcorder, computer (notebook), set-top box, etc., and can also perform input/output operations with the external devices.

In addition, the external device interface unit (130) may establish a communication network with various remote control devices (200) as shown in FIG. 1, receive control signals related to the operation of the display device (100) from the remote control device (200), or transmit data related to the operation of the display device (100) to the remote control device (200).

The A/V input/output unit may receive video and audio signals from an external device. For example, the A/V input/output unit may include an Ethernet terminal, a USB terminal, a Composite Video Banking Sync (CVBS) terminal, a component terminal, an S-video terminal (analog), a Digital Visual Interface (DVI) terminal, a High Definition Multimedia Interface (HDMI) terminal, a Mobile High-definition Link (MHL) terminal, an RGB terminal, a D-SUB terminal, an IEEE 1394 terminal, an SPDIF terminal, a Liquid HD terminal, etc. Digital signals input through these terminals can be delivered to the controller (170). At this time, analog signals input through the CVBS terminal and the S-video terminal can be converted into digital signals through an analog-to-digital converter (not shown) and delivered to the controller (170).

The external device interface unit (130) may include a wireless communication unit (not shown) for short-range wireless communication with other electronic devices. Through this wireless communication unit, the external device interface unit (130) can exchange data with an adjacent mobile terminal. For example, in a mirroring mode, the external device interface unit (130) can receive device information, executed application information, application images, etc., from the mobile terminal.

The external device interface unit (130) may perform short-range wireless communication using Bluetooth, Radio Frequency Identification (RFID), Infrared Data Association (IrDA), Ultra-Wideband (UWB), ZigBee, etc.

The network interface unit (135) may provide an interface for connecting the display device (100) to a wired/wireless network including the Internet.

The network interface unit (135) may include a communication module (not shown) for connection with a wired/wireless network. For example, the network interface unit (135) may include a communication module for WLAN (Wireless LAN) (Wi-Fi), Wibro (Wireless broadband), Wimax (World Interoperability for Microwave Access), HSDPA (High Speed Downlink Packet Access), etc.

The network interface unit (135) may transmit or receive data with other users or other electronic devices through the connected network or other networks linked to the connected network.

The network interface unit (135) may receive web content or data provided by a content provider or a network operator. That is, the network interface unit (135) may receive content such as movies, advertisements, games, VOD, broadcasts, etc., and information related thereto from a content provider or a network provider through the network.

The network interface unit (135) may receive firmware update information and update files provided by the network operator, and may transmit data to the Internet or the content provider or the network operator.

The network interface unit (135) may select and receive a desired application from among applications that are open to the public through the network.

The storage unit (140) may store programs for each signal processing and control within the controller (170), and may also store signal-processed video, audio, or data signals. For example, the storage unit (140) may store application programs designed for the purpose of performing various tasks processable by the controller (170), and may selectively provide some of the stored application programs upon request from the controller (170).

The programs and the like stored in the storage unit (140) are not particularly limited as long as they can be executed by the controller (170).

The storage unit (140) may also perform a function for temporarily storing video, audio, or data signals received from an external device through the external device interface unit (130).

The storage unit (140) may store information regarding a predetermined broadcast channel through a channel memory function such as a channel map.

Although FIG. 2 shows an embodiment where the storage unit (140) is provided separately from the controller (170), the scope of the present disclosure is not limited thereto, and the storage unit (140) may be included within the controller (170).

The storage unit (140) may include at least one of a volatile memory (e.g., DRAM, SRAM, SDRAM, etc.) or a non-volatile memory (e.g., Flash memory, Hard disk drive (HDD), Solid-state drive (SSD), etc.). In various embodiments of the present disclosure, the storage unit (140) and memory may be used interchangeably.

The user input interface unit (150) may deliver a signal input by the user to the controller (170), or deliver a signal from the controller (170) to the user.

For example, it may transmit/receive user input signals such as power on/off, channel selection, screen setting, etc., from the remote control device (200), deliver user input signals input from local keys (not shown) such as a power key, channel key, volume key, setting value, etc., to the controller (170), deliver user input signals input from a sensor unit (not shown) that senses a user's gesture to the controller (170), or transmit signals from the controller (170) to the sensor unit.

The input unit (160) may be provided on one side of the main body of the display device (100). For example, the input unit (160) may include a touch pad, physical buttons, etc.

The input unit (160) may receive various user commands related to the operation of the display device (100), and may deliver a control signal corresponding to the input command to the controller (170).

The input unit (160) may include at least one microphone (not shown), and may receive a user's voice through the microphone.

The controller (170) may include at least one processor and, using the processor included therein, may control the overall operation of the display device (100). Here, the processor may be a general-purpose processor such as a CPU (central processing unit). Of course, the processor may be a dedicated device such as an ASIC or another hardware-based processor.

The controller (170) may demultiplex a stream input through the tuner unit (110), the demodulating unit (120), the external device interface unit (130), or the network interface unit (135), or process the demultiplexed signals to generate and output signals for video or audio output.

The display (180) may convert the video signal, data signal, OSD signal, control signal processed in the controller (170) or the video signal, data signal, control signal received from the external device interface unit (130) to generate a driving signal.

The display (180) may include a display panel (not shown) having a plurality of pixels.

The plurality of pixels provided on the display panel may have RGB sub-pixels. Alternatively, the plurality of pixels provided on the display panel may have RGBW sub-pixels. The display (180) may convert the video signal, data signal, OSD signal, control signal, etc., processed in the controller (170) to generate a driving signal for the plurality of pixels.

The display (180) may be a PDP (Plasma Display Panel), LCD (Liquid Crystal Display), OLED (Organic Light Emitting Diode), flexible display, etc., and may also be a 3D display. The 3D display (180) can be classified into a glasses-free type and a glasses-type.

Meanwhile, the display (180) may be configured as a touch screen and used as an input device in addition to an output device.

The audio output unit (185) receives an audio-processed signal from the controller (170) and outputs it as sound.

The video signal processed in the controller (170) may be input to the display (180) and displayed as a video corresponding to the video signal. In addition, the video signal processed in the controller (170) may be input to an external output device through the external device interface unit (130).

The audio signal processed in the controller (170) may be output as sound to the audio output unit (185). In addition, the audio signal processed in the controller (170) may be input to an external output device through the external device interface unit (130).

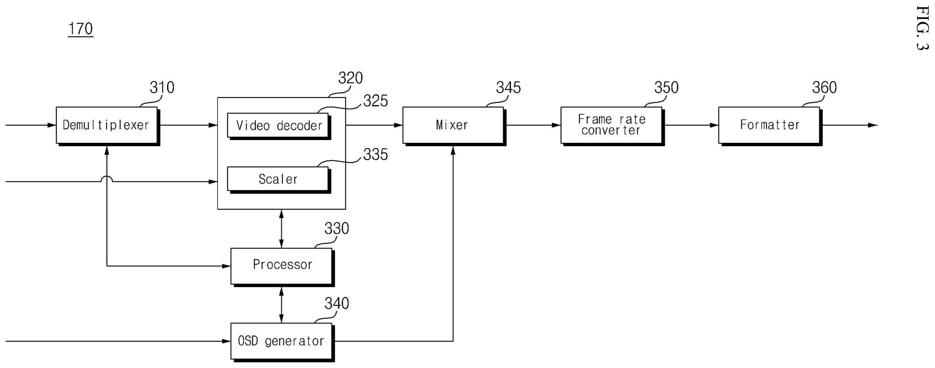

Although not shown in FIG. 2, the controller (170) may include a demultiplexer, a video processing unit, etc. This will be described later with reference to FIG. 3.

In addition, the controller (170) may control the overall operation within the display device (100). For example, the controller (170) may control the tuner unit (110) to select (Tune) a broadcast corresponding to a channel selected by the user or a pre-stored channel.

In addition, the controller (170) may control the display device (100) by a user command input through the user input interface unit (150) or by an internal program.

Meanwhile, the controller (170) may control the display (180) to display a video. At this time, the video displayed on the display (180) may be a still image or a moving image, and may be a 2D image or a 3D image.

Meanwhile, the controller (170) may cause a predetermined 2D object to be displayed within the video displayed on the display (180). For example, the object may be at least one of a connected web screen (newspaper, magazine, etc.), an EPG (Electronic Program Guide), various menus, widgets, icons, still images, moving images, and text.

Meanwhile, the display device (100) may further include a capturing unit (not shown). The capturing unit may capture the user. The capturing unit can be implemented with a single camera, but is not limited thereto, and can also be implemented with a plurality of cameras. Meanwhile, the capturing unit may be embedded in the display device (100) on top of the display (180) or may be arranged separately. Video information captured by the capturing unit may be input to the controller (170).

The controller (170) may recognize the user's position based on the video captured from the capturing unit. For example, the controller (170) can determine the distance (z-axis coordinate) between the user and the display device (100). In addition, the controller (170) can determine the x-axis coordinate and the y-axis coordinate in the display (180) corresponding to the user's position.

The controller (170) may detect the user's gesture based on the video captured from the capturing unit, or a signal sensed from the sensor unit, or a combination thereof.

The power supply unit (190) may supply the corresponding power throughout the display device (100). In particular, it may supply power to the controller (170), which can be implemented in the form of a System On Chip (SOC), the display (180) for video display, and the audio output unit (185) for audio output.

Specifically, the power supply unit (190) may include a converter (not shown) that converts AC power to DC power, and a DC/DC converter (not shown) that converts the level of the DC power.

The remote control device (200) may transmit a user input to the user input interface unit (150). For this, the remote control device (200) may use Bluetooth, RF (Radio Frequency) communication, Infrared (IR) communication, UWB (Ultra-wideband), ZigBee, etc. In addition, the remote control device (200) may receive video, audio, or data signals output from the user input interface unit (150) and display them or output them as audio in the remote control device (200).

Meanwhile, the above-described display device (100) may be a fixed or mobile digital broadcast receiver capable of receiving digital broadcasts.

Meanwhile, the block diagram of the display device (100) shown in FIG. 2 is only a block diagram for one embodiment of the present disclosure, and each component of the block diagram may be integrated, added, or omitted depending on the specifications of the actually implemented display device (100).

That is, if necessary, two or more components may be combined into one component, or one component may be subdivided into two or more components. In addition, the function performed by each block is for explaining the embodiment of the present disclosure, and its specific operation or device does not limit the scope of rights of the present disclosure.

FIG. 3 is an internal block diagram of the controller of FIG. 2.

Referring to FIG. 3, the controller (170) according to an embodiment of the present disclosure may include a demultiplexer (310), a video processing unit (320), a processor (330), an OSD generator (340), a mixer (345), a frame rate converter (350), and/or a formatter (360). In addition, it may further include an audio processing unit (not shown) and a data processing unit (not shown).

The demultiplexer (310) can demultiplex an input stream. For example, if an MPEG-2 TS is input, it can be demultiplexed and separated into video, audio, and data signals, respectively. Here, the stream signal input to the demultiplexer (310) may be a stream signal output from the tuner unit (110), the demodulating unit (120), or the external device interface unit (130).

The video processing unit (320) can perform video processing of the demultiplexed video signal. For this, the video processing unit (320) may include a video decoder (325) and a scaler (335).

The video decoder (325) can decode the demultiplexed video signal, and the scaler (335) can perform scaling so that the resolution of the decoded video signal can be output on the display (180).

The video decoder (325) may include decoders of various standards. For example, it may include an MPEG-2, H.264 decoder, a 3D video decoder for a color image and a depth image, a decoder for a multi-view video, etc.

The processor (330) can control the overall operation within the display device (100) or within the controller (170). For example, the processor (330) can control the tuner (110) to tune to a broadcast corresponding to a channel selected by the user or a pre-stored channel.

In addition, the processor (330) can control the display device (100) by a user command input through the user input interface unit (150) or by an internal program.

In addition, the processor (330) can control data transmission with the network interface unit (135) or the external device interface unit (130).

In addition, the processor (330) can control the operation of the demultiplexer (310), the video processing unit (320), the OSD generator (340), etc., within the controller (170).

The OSD generator (340) can generate an OSD signal according to a user input or on its own. For example, based on a user input signal input through the input unit (160), it can generate a signal for displaying various information on the screen of the display (180) as graphics or text.

The generated OSD signal may include various data such as a user interface screen of the display device (100), various menu screens, widgets, icons, etc. In addition, the generated OSD signal may include a 2D object or a 3D object.

In addition, the OSD generator (340) can generate a pointer, which can be displayed on the display (180), based on a pointing signal input from the remote control device (200).

The OSD generator (340) may include a pointing signal processing unit (not shown) that generates a pointer. It is also possible that the pointing signal processing unit (not shown) is provided separately instead of within the OSD generator (340).

The mixer (345) can mix the OSD signal generated by the OSD generator (340) and the decoded video signal processed by the video processing unit (320). The mixed video signal can be provided to the frame rate converter (350).

The Frame Rate Converter (FRC) (350) can convert the frame rate of an input video. Meanwhile, the frame rate converter (350) may also output it as it is without a separate frame rate conversion.

The formatter (360) can arrange the left-eye image frame and the right-eye image frame of the frame-rate-converted 3D video. And it can output a synchronization signal (Vsync) for opening the left-eye glass and the right-eye glass of a 3D viewing device (not shown).

Meanwhile, the formatter (360) can change the format of the input video signal to a video signal for display on the display (180) and output it.

In addition, the formatter (360) can change the format of the 3D video signal. For example, it can be changed to any one of various 3D formats such as Side by Side format, Top/Down format, Frame Sequential format, Interlaced format, Checker Box format, etc.

Meanwhile, the formatter (360) may also convert a 2D video signal into a 3D video signal. For example, according to a 3D video generation algorithm, it can detect an edge or a selectable object within a 2D video signal, and separate and generate the object according to the detected edge or the selectable object as a 3D video signal. At this time, the generated 3D video signal can be separated and arranged into a left-eye video signal (L) and a right-eye video signal (R) as described above.

Meanwhile, although not shown in the figure, a 3D processor (not shown) for 3D effect signal processing may be further disposed after the formatter (360). Such a 3D processor can process brightness, tint, and color adjustments of the video signal to improve the 3D effect. For example, it can perform signal processing that makes near objects sharp and distant objects blurry. Meanwhile, the function of this 3D processor can be merged into the formatter (360) or merged into the video processing unit (320).

Meanwhile, an audio processing unit (not shown) within the controller (170) can perform audio processing of the demultiplexed audio signal. For this, the audio processing unit (not shown) may include various decoders.

In addition, the audio processing unit (not shown) within the controller (170) can process base, treble, volume control, etc.

A data processing unit (not shown) within the controller (170) can perform data processing of the demultiplexed data signal. For example, if the demultiplexed data signal is an encoded data signal, it can be decoded. The encoded data signal may be Electronic Program Guide (EPG) information including broadcast information such as the start time and end time of a broadcast program aired on each channel.

Meanwhile, the block diagram of the controller (170) shown in FIG. 3 is only a block diagram for one embodiment of the present disclosure, and each component of the block diagram may be integrated, added, or omitted depending on the specifications of the actually implemented controller (170).

In particular, the frame rate converter (350) and the formatter (360) may not be provided within the controller (170), but may be provided separately, or may be provided separately as a single module.

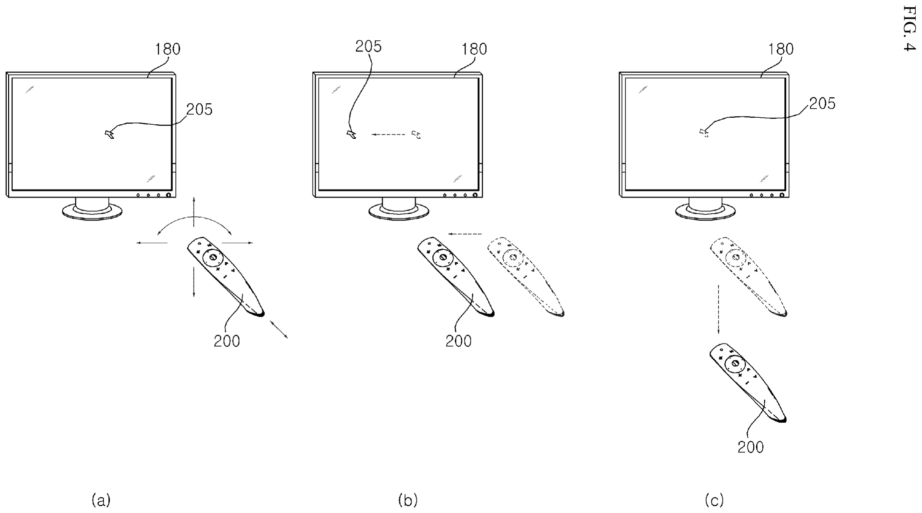

FIG. 4 is a diagram illustrating a control method of the remote control device of FIG. 2.

Referring to FIG. 4, it can be confirmed that a pointer (205) corresponding to the remote control device (200) is displayed on the display (180) of the display device (100).

Referring to FIG. 4(a), the user can move the remote control device (200) up, down, left, right, back, and forth, or rotate it. At this time, the pointer (205) displayed on the display (180) of the display device (100) may be displayed corresponding to the movement of the remote control device (200). Since this remote control device (200), as shown in the figure, moves and displays the corresponding pointer (205) according to the movement in 3D space, it can be called a spatial remote controller or a 3D pointing device.

Referring to FIG. 4(b), when the user moves the remote control device (200) to the left, it can be confirmed that the pointer (205) displayed on the display (180) of the display device (100) also moves to the left corresponding to the movement of the remote control device (200).

Information about the movement of the remote control device (200) sensed through the sensor of the remote control device (200) can be transmitted to the display device (100). The display device (100) can calculate the coordinates of the pointer (205) from the information about the movement of the remote control device (200). The display device (100) can display the pointer (205) to correspond to the calculated coordinates.

Referring to FIG. 4(c), while pressing a specific button provided on the remote control device (200), the user can move the remote control device (200) away from the display (180). As a result, the selected area in the display (180) corresponding to the pointer (205) can be zoomed-in and displayed enlarged. Conversely, while pressing a specific button provided on the remote control device (200), when the user moves the remote control device (200) closer to the display (180), the selected area in the display (180) corresponding to the pointer (205) can be zoomed-out and displayed reduced.

Meanwhile, when the remote control device (200) moves away from the display (180), the selected area may be zoomed-out, and when the remote control device (200) moves closer to the display (180), the selected area may be zoomed-in.

Meanwhile, while the user is pressing a specific button in the remote control device (200), the recognition of up, down, left, and right movements may be excluded. That is, when the remote control device (200) moves away from or approaches the display (180), up, down, left, and right movements may not be recognized, and only back and forth movements may be recognized. When the user is not pressing a specific button in the remote control device (200), only the up, down, left, and right movements of the remote control device (200) can be recognized, and accordingly, only the pointer (205) can move.

Meanwhile, the moving speed or moving direction of the pointer (205) may correspond to the moving speed or moving direction of the remote control device (200).

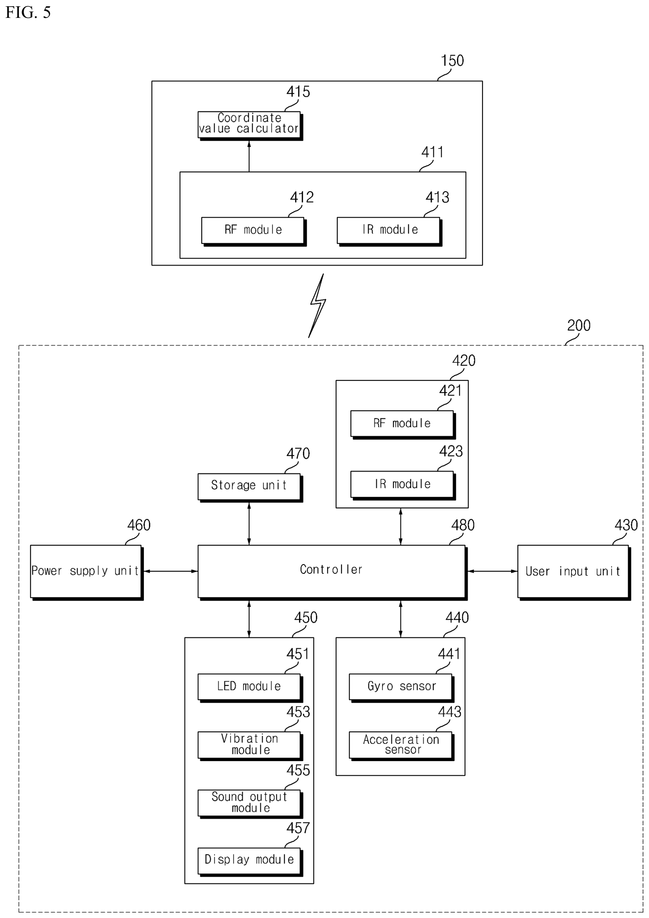

FIG. 5 is an internal block diagram of the remote control device of FIG. 2.

Referring to FIG. 5, the remote control device (200) may include a wireless communication unit (420), a user input unit (430), a sensor unit (440), an output unit (450), a power supply unit (460), a storage unit (470), and/or a controller (480).

The wireless communication unit (420) can transmit and receive signals to and from the display device (100).

In this embodiment, the remote control device (200) may include an RF (Radio frequency) module (421) that can transmit and receive signals with the display device (100) according to an RF communication standard. In addition, the remote control device (200) may include an IR (Infrared radiation) module (423) that can transmit and receive signals with the display device (100) according to an IR communication standard.

The remote control device (200) can transmit a signal including information about the movement of the remote control device (200) to the display device (100) through the RF module (421). The remote control device (200) can receive a signal transmitted by the display device (100) through the RF module (421).

The remote control device (200) can transmit commands regarding power on/off, channel change, volume change, etc., to the display device (100) through the IR module (423).

The user input unit (430) can be configured with a keypad, buttons, a touch pad, a touch screen, etc. The user can operate the user input unit (430) to input commands related to the display device (100) to the remote control device (200).

If the user input unit (430) has hard key buttons, the user can input commands related to the display device (100) to the remote control device (200) through a push operation of the hard key buttons.

If the user input unit (430) has a touch screen, the user can touch a soft key on the touch screen to input commands related to the display device (100) to the remote control device (200).

Meanwhile, the user input unit (430) may also include various types of input means that the user can operate, such as a scroll key, a jog key, a microphone, etc., and this embodiment does not limit the scope of rights of the present disclosure.

The sensor unit (440) may include a gyro sensor (441) or an acceleration sensor (443). The gyro sensor (441) can sense the movement of the remote control device (200).

The gyro sensor (441) can sense information about the operation of the remote control device (200) based on the x, y, and z axes. The acceleration sensor (443) can sense information about the moving speed of the remote control device (200). Meanwhile, the sensor unit (440) may further include a distance measurement sensor that can sense the distance to the display (180).

The output unit (450) can output a video or audio signal corresponding to the operation of the user input unit (430) or a signal transmitted from the display device (100). Through the output unit (450), the user can recognize whether the user input unit (430) has been operated or whether the display device (100) has been controlled.

The output unit (450) may include an LED module (451) that lights up when the user input unit (430) is operated or a signal is transmitted/received with the display device (100) through the wireless communication unit (420), a vibration module (453) that generates vibration, an audio output module (455) that outputs sound, and/or a display module (457) that outputs a video.

The power supply unit (460) can supply power to each component provided in the remote control device (200). The power supply unit (460) can stop supplying power when the remote control device (200) has not moved for a predetermined period of time, thereby reducing power waste. The power supply unit (460) can resume power supply when a predetermined key provided on the remote control device (200) is operated.

The storage unit (470) may store various types of programs, application data, etc., necessary for the control or operation of the remote control device (200).

When the remote control device (200) transmits and receives signals wirelessly with the display device (100) through the RF module (421), the remote control device (200) and the display device (100) can transmit and receive signals through a predetermined frequency band. The controller (480) of the remote control device (200) may store and refer to information about the frequency band, etc., that can be used to wirelessly transmit and receive signals with the display device (100) paired with the remote control device (200) in the storage unit (470).

The controller (480) may include at least one processor and, using the processor included therein, may control the overall operation of the remote control device (200).

The controller (480) can transmit a signal corresponding to a predetermined key operation of the user input unit (430) or a signal corresponding to the movement of the remote control device (200) sensed by the sensor unit (440) to the display device (100) through the wireless communication unit (420).

The user input interface unit (150) of the display device (100) may include a wireless communication unit (151) that can wirelessly transmit and receive signals with the remote control device (200), and a coordinate value calculation unit (415) that can calculate the coordinate value of the pointer corresponding to the operation of the remote control device (200).

The user input interface unit (150) can transmit and receive signals wirelessly with the remote control device (200) through an RF module (412). In addition, it can receive a signal transmitted by the remote control device (200) according to the IR communication standard through an IR module (413).

The coordinate value calculation unit (415) can correct for hand tremors or errors from the signal corresponding to the operation of the remote control device (200) received through the wireless communication unit (151) and calculate the coordinate value (x, y) of the pointer (205) to be displayed on the display (180).

The signal transmitted by the remote control device (200) input to the display device (100) through the user input interface unit (150) can be delivered to the controller (170) of the display device (100). The controller (170) of the display device (100) can determine information about the operation and key manipulation of the remote control device (200) from the signal transmitted from the remote control device (200) and control the display device (100) accordingly.

As another example, the remote control device (200) can calculate the pointer coordinate value corresponding to its operation and output it to the user input interface unit (150) of the display device (100). In this case, the user input interface unit (150) of the display device (100) can transmit information about the received pointer coordinate value to the controller (170) without a separate hand tremor or error correction process.

In addition, as another example, the coordinate value calculation unit (415) may be provided inside the controller (170), not in the user input interface unit (150) as shown in the figure.

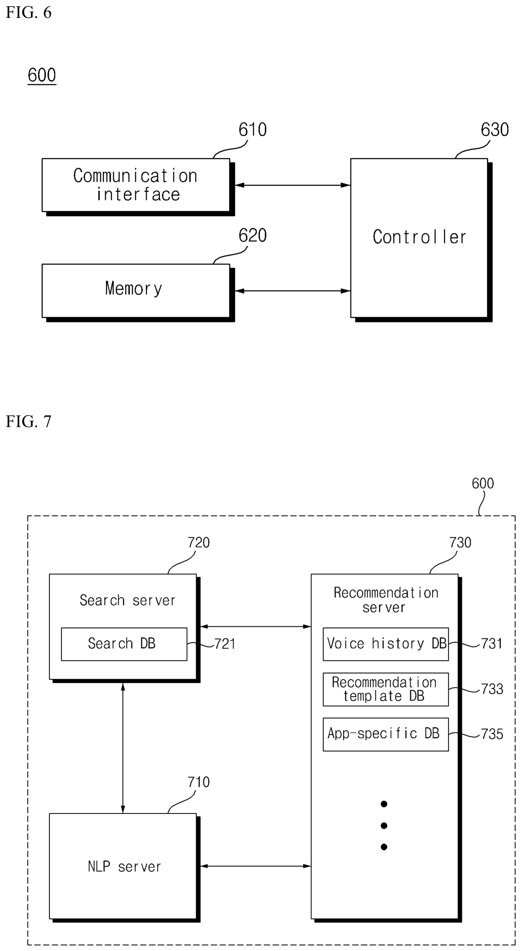

FIGS. 6 and 7 are internal block diagrams of the server of FIG. 1.

Referring to FIG. 6, the server (600) may include a communication interface (610), a memory (620), and/or a controller (630).

The communication interface (610) may include at least one communication module for a communication connection with the network (500). The communication interface (610) may connect to the network (500) and communicate with the display device (100).

The memory (620) may store programs for each signal processing and control within the controller (630). The memory (620) may store signal-processed data signals. For example, the memory (620) may store application programs designed for the purpose of performing various tasks processable by the controller (630), and may selectively provide some of the stored application programs upon request from the controller (630). The programs and the like stored in the memory (620) are not particularly limited as long as they can be executed by the controller (630).

The storage unit (620) may include at least one of a volatile memory (e.g., DRAM, SRAM, SDRAM, etc.) or a non-volatile memory (e.g., flash memory), a hard disk drive (HDD), a solid-state drive (SSD), etc.

The storage unit (620) may store at least one database. The storage unit (620) may store pre-learned data, models, algorithms, etc., through machine learning such as deep learning.

The controller (630) can be connected to each component provided in the server (600). The controller (630) can control the overall operation of each component provided in the server (600). The controller (630) can transmit and receive data to and from each component provided in the server (600).

Referring to FIG. 7, the server (600) may be composed of at least one sub-server. The server (600) may include an NLP server (710), a search server (720), and/or a recommendation server (730).

The NLP server (710) may receive data corresponding to a voice input from the display device (100). The data corresponding to the voice input may be audio data corresponding to the voice input. The NLP server (710) may process the data corresponding to the voice input. The NLP server (710) may perform voice recognition using natural language processing (NLP) technology. The NLP server (710) may include a Speech-to-Text (STT) server that converts audio data corresponding to a voice input into text.

The NLP server (710) may extract at least one word included in the voice input. For example, the NLP server (710) may receive audio data corresponding to "Search for Baby Shark on YouTube" from the display device (100). In this case, the NLP server (710) may extract the words 'YouTube', 'Baby Shark', and 'search' included in the voice input from the received audio data. The NLP server (710) may transmit the at least one word extracted from the voice input to the search server (720).

The search server (720) may receive data from the NLP server (710) and/or the recommendation server (730). For example, it may receive data including at least one word from the NLP server (710) and/or the recommendation server (730).

The search server (720) may store at least one database (hereinafter, search DB) (721). The search DB (721) stored in the search server (720) may include data composed of a specific word and information related to the specific word. The information related to the specific word may include the type of the specific word, the genre of the specific word, a function related to the specific word, an application related to the specific word, etc. For example, if the specific word is 'Pororo', which is the title of a specific content, the information related to the specific word may include 'title' as the type of the specific word, 'children' as the genre of the specific word, etc. For example, if the specific word is 'search', which is a specific action, the information related to the specific word may be 'search function' as the function related to the specific word.

The search server (720) may transmit data corresponding to the result of processing the data received from the NLP server (710) and/or the recommendation server (730) (hereinafter, response data) to the NLP server (710) and/or the recommendation server (730). The response data may include at least one piece of information related to the word included in the data received from the NLP server (710) and/or the recommendation server (730). For example, if the search server (720) receives data including 'YouTube', 'Baby Shark', and 'search', it may generate response data including 'YouTube' as the application related to 'YouTube', 'title' as the type of 'Baby Shark', 'children' as the genre of 'Baby Shark', and 'search function' as the function related to 'search'.

The NLP server (710) may transmit data about the result of processing the voice input (hereinafter, voice processing result data) to the display device (100). The NLP server (710) may generate the voice processing result data based on the response data received from the search server (720). For example, the NLP server (710) may generate data including both the word extracted from the voice input and the information related to the extracted word as the voice processing result data.

The recommendation server (730) may store at least one database. The recommendation server (730) may store a database about the history of processing voice inputs (hereinafter, voice history DB) (731), a database about the composition of sentences output from the display device (100) (hereinafter, recommendation template DB) (733), a database that manages user usage histories for each application (hereinafter, App-specific DB) (735), etc.

The recommendation server (730) may update at least one database. For example, the recommendation server (730) may update the voice history DB (731) based on the voice processing result data received from the NLP server (710). For example, the recommendation server (730) may update the App-specific DB (735) based on the history of processing voice inputs related to a specific application, included in the voice history DB (731).

The recommendation server (730) may receive at least one keyword from the display device (100). The recommendation server (730) may determine at least one keyword associated with the keyword received from the display device (100). The recommendation server (730) may transmit the keyword associated with the keyword received from the display device (100) to the display device (100). Hereinafter, the keyword that the display device (100) transmits to the server (600) may be referred to as a first keyword, and the keyword associated with the first keyword may be referred to as a second keyword.

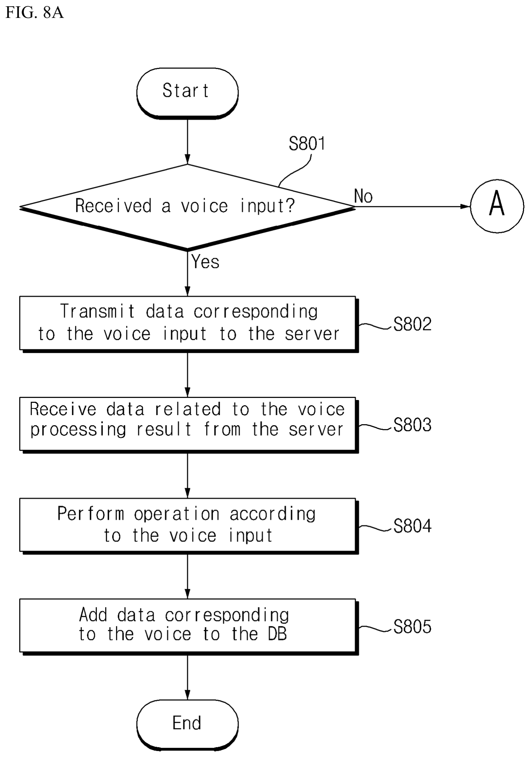

FIGS. 8a to 10 are flowcharts illustrating an operating method of a display device according to an embodiment of the present disclosure.

Referring to FIG. 8a, in operation S801, the display device (100) can determine whether a voice input is received. For example, the display device (100) can receive a voice input through a microphone included in the input unit (160). For example, the display device (100) can receive a signal corresponding to a voice input from the remote control device (200) through the user input interface unit (150).

In operation S802, the display device (100), based on the reception of the voice input, can transmit data corresponding to the voice input to the server (600) through the network interface unit (135). For example, the display device (100) can transmit audio data corresponding to the voice input to the NLP server (710).

In operation S803, the display device (100) can receive voice processing result data from the server (600) through the network interface unit (135). The voice processing result data may include words included in the voice input. For example, if the received voice input is 'Search for Baby Shark on YouTube', the voice processing result data may include 'YouTube', 'Baby Shark', and 'search', respectively. The voice processing result data may include information related to the words included in the voice input. For example, if the voice processing result data includes 'YouTube', 'Baby Shark', and 'search', information related to the words, such as 'YouTube' as the application related to 'YouTube', 'title' as the type of 'Baby Shark', 'children' as the genre of 'Baby Shark', and 'search function' as the function related to 'search', may be included in the voice processing result data.

In operation S804, the display device (100), based on the voice processing result data, can perform an operation according to the voice input. For example, the display device (100), based on the fact that the voice processing result data includes 'title' indicating the name of a specific content and 'search function' indicating a specific function, can perform a search operation for 'Baby Shark'. At this time, the display device (100), based on the fact that the voice processing result data includes 'YouTube' indicating a specific application, can execute the application 'YouTube' and then output a screen corresponding to the result of performing the search operation for 'Baby Shark' through the display (180).

According to one embodiment, if the voice processing result data includes a word indicating a specific application, the display device (100) can execute the application corresponding to the word and perform a predetermined operation. Meanwhile, if the voice processing result data does not include a word indicating a specific application, the display device (100) can perform a predetermined operation through the currently running application.

In operation S805, the display device (100) can add data corresponding to the voice to a database. The data corresponding to the voice may include at least one of a keyword that is the target of the operation performance among the words included in the voice input (hereinafter, input keyword) and/or information related to the input keyword (hereinafter, associated keyword), and the time point when the voice input was received (hereinafter, voice time point). For example, the display device (100), based on performing the search operation for 'Baby Shark', can generate data corresponding to the voice that includes 'Baby Shark', which is the name of the content, as the input keyword, and 'children', which is the genre of the content, as the associated keyword.

According to one embodiment, the storage unit (140) may store at least one database corresponding to an application. For example, the storage unit (140) may store a plurality of databases corresponding respectively to OTT services that provide content, such as 'YouTube', 'Netflix', 'Disney+', 'TVING', etc.

The display device (100) can determine an application related to the received voice input from among the databases stored in the storage unit (140). At this time, the display device (100) can add the data corresponding to the voice to the database corresponding to the application related to the received voice input. For example, if the voice processing result data includes a specific word corresponding to the application to be executed, the application corresponding to the specific word can be determined as the application related to the voice input. For example, if the voice processing result data does not include a specific word corresponding to the application to be executed, the currently running application can be determined as the application related to the voice.

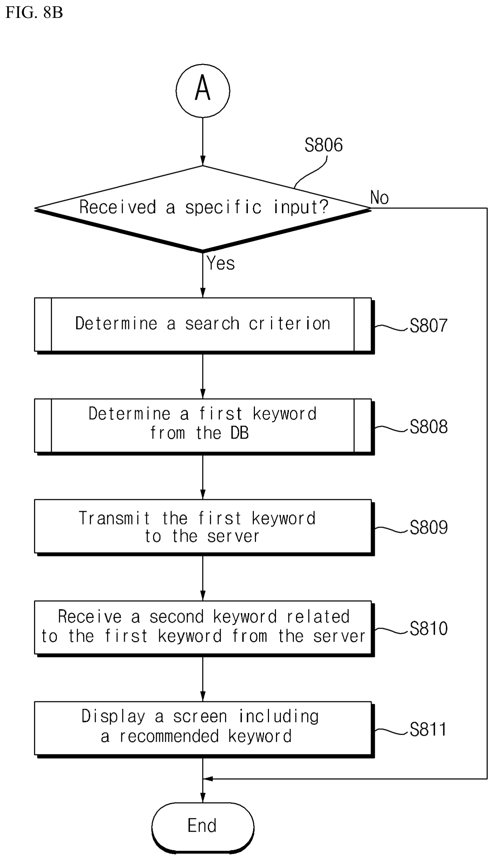

Referring to FIG. 8b, in operation S806, the display device (100) can determine whether a predetermined input related to a specific application is received. For example, the display device (100) can determine whether a predetermined input of pressing a specific button on the remote control device (200) is received through the user input interface unit (150).

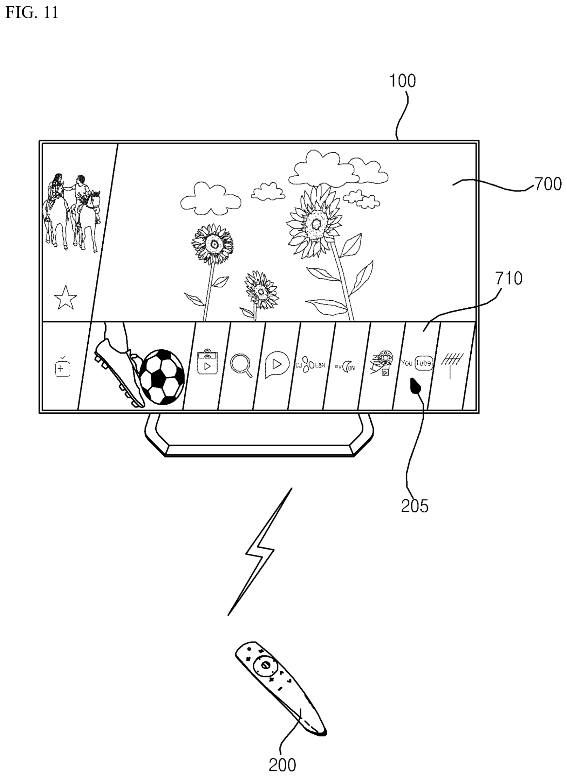

Referring to FIG. 11, the display device (100) can output a home screen (1100) that includes objects corresponding to a plurality of applications. For example, the home screen (1100) may include at least one object corresponding to an application related to an OTT service that provides content.

When a user presses a specific button included in the user input unit (430) of the remote control device (200) while a pointer (205) corresponding to the remote control device (200) is pointing to an object (1110) corresponding to an application that provides a specific OTT service (e.g., YouTube), the display device (100) can determine that a predetermined input related to the specific application providing the specific OTT service (e.g., YouTube) has been received.

Meanwhile, when the user presses a specific button included in the user input unit (430) of the remote control device (200) while the pointer (205) is not pointing to an object corresponding to an application included in the home screen (1100), the display device (100) can determine that a predetermined input not related to a specific application has been received.

According to one embodiment, the display device (100) can determine whether a predetermined input related to a specific application has been received based on an input received while a screen providing a specific OTT service (e.g., YouTube) is output via the display (180). For example, when a user presses a specific button included in the user input unit (430) of the remote control device (200) while a screen providing a specific OTT service (e.g., YouTube) is being output via the display (180), the display device (100) may also determine that a predetermined input related to the specific application providing the specific OTT service (e.g., YouTube) has been received.

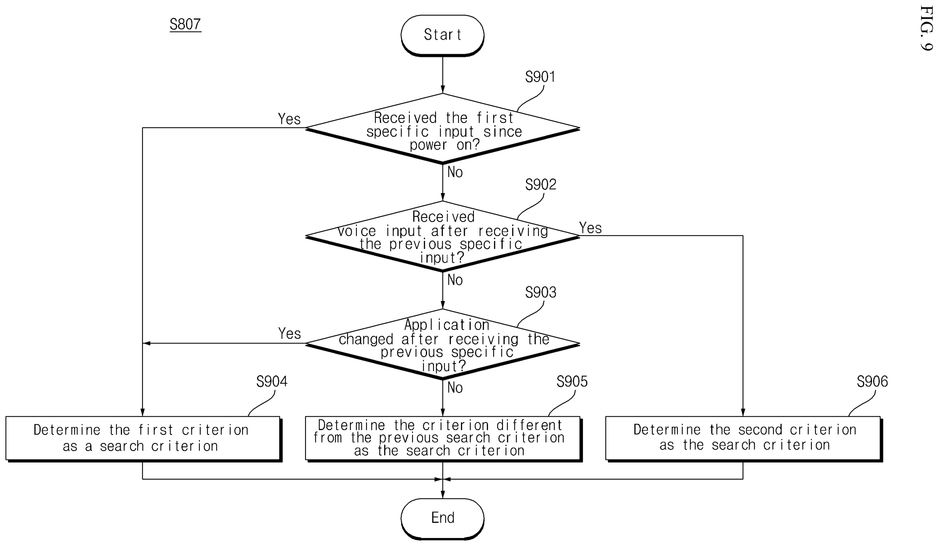

In operation S807, the display device (100) can determine a criterion for searching data in the database stored in the storage unit (140) (hereinafter, search criterion). This will be described in detail with reference to FIG. 9.

Referring to FIG. 9, in operation S901, the display device (100) can determine whether the predetermined input is the first predetermined input received after the display device (100) was powered on.

In operation S902, if it is not the first predetermined input received after the display device (100) was powered on, the display device (100) can determine whether a voice input was received between the immediately preceding predetermined input (hereinafter, preceding predetermined input) and the currently received predetermined input. That is, the display device (100) can determine whether a predetermined input was received again after the preceding predetermined input and a voice input were received in sequence.

In operation S903, if a voice input was not received after the preceding predetermined input was received, the display device (100) can determine whether the application related to the predetermined input was changed after the preceding predetermined input was received. For example, the display device (100) can determine whether the applications running in the foreground at the time the preceding predetermined input was received and the time the current predetermined input was received are different from each other.

In operation S904, if it is the first predetermined input received after the display device (100) was powered on, or if the application related to the predetermined input has been changed, the display device (100) can determine a first criterion among a plurality of criteria as the search criterion. Here, the first criterion may be a criterion related to the frequency of a keyword. For example, when the search criterion is set to the first criterion, the display device (100) can select words in descending order of frequency among the input keywords included in the data corresponding to the voice.

In operation S905, if the application related to the predetermined input is the same, the display device (100) can determine a criterion different from the criterion currently set as the search criterion according to the preceding predetermined input.

Meanwhile, in operation S906, if a voice input was received between the preceding predetermined input and the currently received predetermined input, the display device (100) can determine a second criterion among the plurality of criteria as the search criterion. Here, the second criterion may be a criterion related to the latest keyword. For example, when the search criterion is set to the second criterion, the display device (100) can select the word most recently stored in the database among the input keywords included in the data corresponding to the voice.

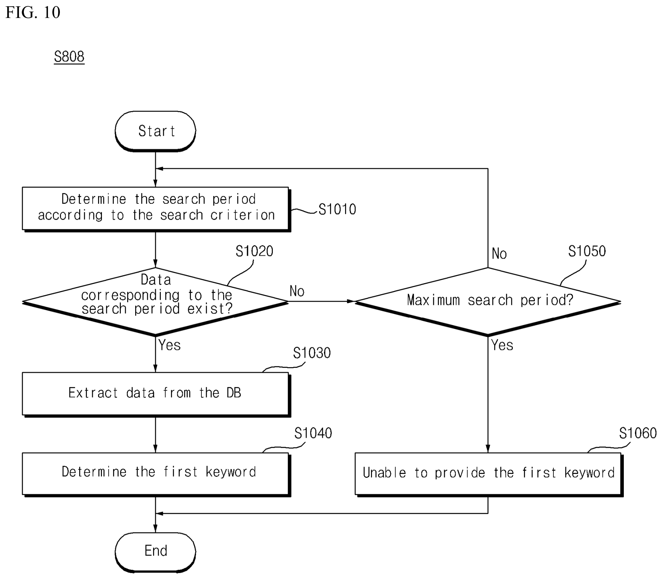

Referring back to FIG. 8b, in operation S808, the display device (100), based on the search criterion, can determine at least one first keyword from the database stored in the storage unit (140). This will be described with reference to FIG. 10.

Referring to FIG. 10, in operation S1010, the display device (100), according to the set search criterion, can determine a period corresponding to the time when the predetermined input was received (hereinafter, search period). For example, the search period determined according to the first criterion may be different from the search period determined according to the second criterion.

The display device (100) can determine the search period according to the day of the week corresponding to the time when the predetermined input was received and/or a predetermined time set based on the time when the predetermined input was received. For example, if a predetermined input is received on a Monday at 4 PM while the search criterion is set to the first criterion, the period from 3 PM to 5 PM every Monday for the last month may be determined as the search period. For example, if a predetermined input is received on a Monday at 4 PM while the search criterion is set to the second criterion, the period from one week before Monday at 4 PM may be determined as the search period.

In operation S1020, the display device (100) can determine whether data corresponding to the determined search period is included in the database stored in the storage unit (140). For example, if the received predetermined input corresponds to a specific application that provides an OTT service 'YouTube', the display device (100) can determine whether data corresponding to the determined search period is included in the database corresponding to 'YouTube'. For example, if the received predetermined input is not related to a specific application, the display device (100) can determine whether data corresponding to the determined search period is included in the databases stored in the storage unit (140).

In operation S1030, if data corresponding to the determined search period exists, the display device (100) can extract the data corresponding to the determined search period from the database stored in the storage unit (140).

In operation S1040, the display device (100) can determine at least one first keyword from the extracted data.

When the search criterion is set to the first criterion, the word selected in descending order of frequency among the input keywords included in the extracted data may be determined as the first keyword. For example, if the frequency of 'Common Siblings' is the highest among the input keywords included in the extracted data, the display device (100) can determine 'Common Siblings' as the first keyword. Meanwhile, the display device (100) can add an associated keyword related to the input keyword determined to have the highest frequency as a first keyword. For example, if the frequency of 'Common Siblings' is the highest among the input keywords included in the extracted data, the display device (100) can determine the input keyword 'Common Siblings' and the associated keyword 'children' as the first keywords.

According to one embodiment, when the search criterion is set to the first criterion, the display device (100) can apply a compensation value to each of the extracted data. Here, a weight may correspond to the time interval between the time when the predetermined input was received and the voice time point included in the extracted data. The weight may increase as the time interval decreases. For example, in a case where 'World Cup' was stored as an input keyword 3 times in data stored a week ago, and 'Common Siblings' was stored as an input keyword 5 times in data stored two weeks ago, 'Common Siblings' might be determined as the first keyword if no weight is applied. On the other hand, if a weight of '2' is applied to the data stored a week ago, and a weight of '1' is applied to the data stored two weeks ago, the storage count of 'World Cup' with weight '2' applied could be 6, and the storage count of 'Common Siblings' with weight '1' applied could be 5. In this case, the display device (100) can determine 'World Cup' as the first keyword.

When the search criterion is set to the second criterion, the input keyword included in the data whose voice time point is closest to the predetermined input among the extracted data can be determined as the first keyword.

Meanwhile, in operation S1040, if data corresponding to the determined search period does not exist, the display device (100) can determine whether the determined search period is a pre-set maximum search period. At this time, if the determined search period is not the maximum search period, the search period can be extended. For example, when the search criterion is set to the first criterion, the display device (100) can extend the search period to the period from 2 PM to 6 PM every Monday for the last month. For example, when the search criterion is set to the second criterion, the display device (100) can extend the search period to the period up to two weeks before Monday at 4 PM.

In operation S1050, if the determined search period is the pre-set maximum search period, the display device (100) can determine that the provision of a first keyword is not possible.

Referring back to FIG. 8b, in operation S809, the display device (100) can transmit the first keyword to the server (600) through the network interface unit (135). For example, the display device (100) can transmit the first keyword to the recommendation server (730). The display device (100) can transmit data indicating the criterion currently set as the search criterion to the server (600) along with the first keyword. The display device (100) can transmit data indicating the application corresponding to the predetermined input to the server (600) along with the first keyword. Meanwhile, if it is determined that the provision of a first keyword is not possible, the display device (100) may transmit only the data indicating the application corresponding to the predetermined input to the server (600).

In operation S810, the display device (100) can receive a second keyword associated with the first keyword from the server (600). The display device (100) can receive the second keyword from the recommendation server (730).

According to one embodiment, the App-specific DB (735) stored in the recommendation server (730) may include a database of at least one word that has a history of being uttered together with a specific word. The recommendation server (730) may include, in the second keyword, at least one word that has a history of being uttered together with the input keyword included in the first keyword received from the display device (100). According to one embodiment, the word with a history of being uttered together with the input keyword, included in the second keyword, may be determined based on the frequency of being uttered together with the input keyword. For example, the recommendation server (730) may select a predetermined number of words in descending order of the frequency of being uttered together with the input keyword, among the words that have a history of being uttered together with the input keyword, and include them in the second keyword.

According to one embodiment, the App-specific DB (735) stored in the recommendation server (730) may include a database of at least one word that has a history of being uttered in relation to a specific genre. For example, a database of words with a history of being uttered in relation to 'children' among genres may include words such as 'Pororo', 'Pinkfong', 'Common Siblings', 'Pokemon', etc., according to their utterance frequency. In this case, if the first keyword includes 'children' as an associated keyword, the recommendation server (730) may select a predetermined number of words in descending order of utterance frequency, among the words that have a history of being uttered in relation to 'children', and include them in the second keyword.

According to one embodiment, the App-specific DB (735) stored in the recommendation server (730) may include a database of words uttered by users who use a specific application. The recommendation server (730) may select a predetermined number of words in descending order of utterance frequency, among the words uttered by users who use a specific application, and include them in the second keyword.

According to one embodiment, the App-specific DB (735) stored in the recommendation server (730) may include a database of recommended channels related to a specific word. For example, the recommendation server (730) may select a predetermined number of channels from among the recommended channels related to the input keyword included in the first keyword received from the display device (100) and include them in the second keyword.

According to one embodiment, the App-specific DB (735) stored in the recommendation server (730) may include a database of recommended words related to a specific application. For example, if data indicating a specific application is received from the display device (100), the recommendation server (730) may select at least one of the recommended words related to the specific application and include it in the second keyword.

According to one embodiment, the App-specific DB (735) stored in the recommendation server (730) may include a database of functions and/or applications related to a specific genre. For example, if the first keyword includes 'children' as an associated keyword, the recommendation server (730) may select at least one of the functions and/or applications related to 'children' and include it in the second keyword.

Meanwhile, the recommendation server (730), based on the input keyword and/or associated keyword included in the first keyword, may include at least one of the sentence structures included in the recommendation template DB (733) in the second keyword. The sentence structure included in the recommendation template DB (733) may include a sentence structure corresponding to the input keyword, a sentence structure corresponding to the associated keyword, a sentence structure corresponding to a popular keyword, a sentence structure corresponding to functions and applications, etc. Meanwhile, the sentence structure included in the second keyword may differ according to the criterion set as the search criterion.

In operation S811, the display device (100) can output, via the display (180), a screen including at least one recommended keyword corresponding to the second keyword. For example, if the second keyword received from the server (600) includes at least one word that has a history of being uttered together with the input keyword, the display device

(100) can determine the input keyword included in the first keyword and the word included in the second keyword as a single recommended keyword. For example, if the second keyword received from the server (600) includes at least one word related to a specific genre, the display device (100) can determine each of those words as a recommended keyword.

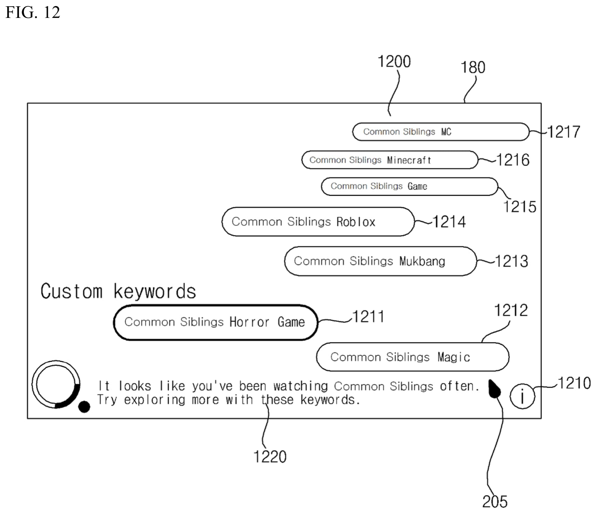

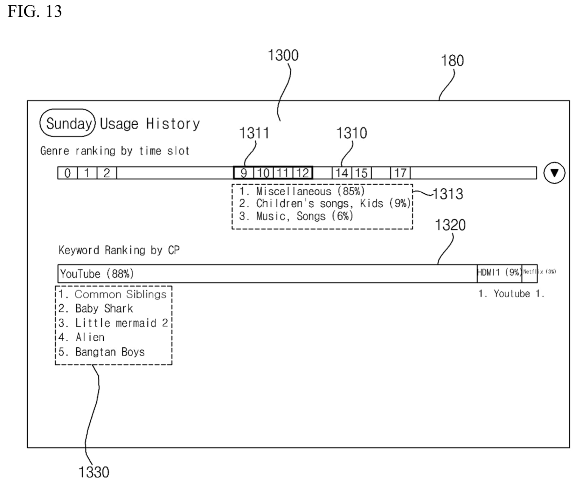

Referring to FIGS. 12 and 13, when the search criterion is set to the first criterion, 'Common Siblings' may be included in the first keyword based on the frequency of the input keyword. At this time, the server (600) can transmit a second keyword including words that have a history of being uttered together with 'Common Siblings' to the display device (100).

The display device (100) can output a first screen (1200) including recommended keywords corresponding to the user's usage history. The first screen (1200) may include at least one recommended keyword corresponding to the input keyword included in the first keyword. For example, if the input keyword included in the first keyword is 'Common Siblings', and the words included in the second keyword are 'horror game', 'magic', 'mukbang', 'Roblox', 'game', 'Minecraft', and 'Mark', the display device (100) can determine 'Common Siblings horror game' (1211), 'Common Siblings magic' (1212), 'Common Siblings mukbang' (1213), 'Common Siblings Roblox' (1214), 'Common Siblings game' (1215), 'Common Siblings Minecraft' (1216), and 'Common Siblings Mark' (1217) as respective recommended keywords.

When the user selects one of the recommended keywords corresponding to the input keyword (1211-1217) using the pointer (205) corresponding to the remote control device (200), the display device (100) can search for the recommended keyword selected by the user among (1211-1217) through a specific application.

The display device (100) can include a sentence (1220) related to the suggestion of recommended keywords in the first screen (1200). The sentence (1220) related to the suggestion of recommended keywords can be generated based on the sentence structure corresponding to the input keyword received from the server (600). The display device (100) can generate the sentence (1220) related to the suggestion of recommended keywords based on the input keyword 'Common Siblings' and the sentence structure included in the second keyword.

The first screen (1200) may include an object (1210) corresponding to the user's usage history. When the user selects the object (1210) corresponding to the user's usage history using the pointer (205) corresponding to the remote control device (200), the display device (100) can output a screen (1300) corresponding to the user's usage history.

The screen (1300) corresponding to the user's usage history may include at least one indicator based on the data included in the database stored in the storage unit (140). The screen (1300) corresponding to the user's usage history may include an indicator (1310) showing the time zone when a voice input was received, an indicator (1311) showing a specific time zone, an indicator (1313) showing the frequency of the type of the target of operation performance included in a voice input received in a specific time zone, an indicator (1320) showing the frequency of applications executed in response to a voice input in a specific time zone, an indicator (1330) showing the frequency of targets searched through a specific application in a specific time zone, and so on. Through this, the user can check the application frequently executed via voice input in a specific time zone. Also, the user can check the keywords frequently searched in relation to a specific application in a specific time zone.

When the user selects one of the recommended keywords corresponding to the input keyword (1211-1217) using the pointer (205) corresponding to the remote control device (200), the display device (100) can search for the recommended keyword selected by the user among (1211-1217) through a specific application.

When the user presses a specific button included in the user input unit (430) of the remote control device (200) while the first screen (1200) is displayed on the display (180), the display device (100) can output a second screen (1400) including recommended keywords corresponding to the user's usage history. For example, the display device (100) can receive from the server (600) a second keyword including words that have a history of being uttered in relation to a specific genre 'children'.

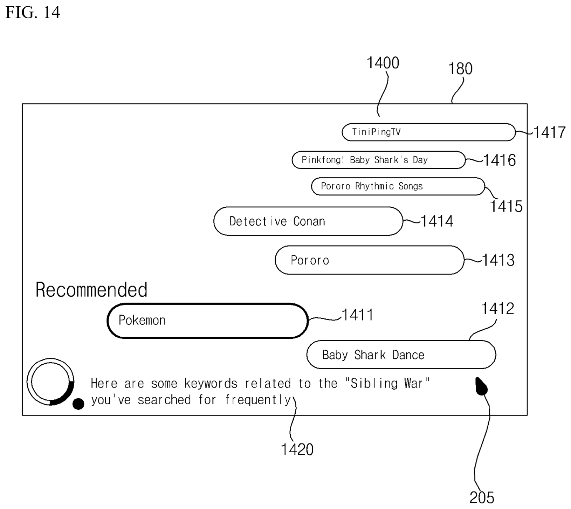

Referring to FIG. 14, the second screen (1400) may include at least one recommended keyword corresponding to the associated keyword included in the first keyword. For example, if the associated keyword included in the first keyword is 'children', the display device (100) can determine 'Pokemon' (1411), 'Baby Shark Dance' (1412), 'Pororo' (1413), 'Detective Conan' (1414), 'Pororo Dance Songs' (1415), 'Pinkfong! Baby Shark's Day' (1416), and 'Teenieping TV' (1417), which are words with a history of being uttered in relation to the specific genre 'children' included in the second keyword, as respective recommended keywords.

When the user selects one of the recommended keywords corresponding to the associated keyword (1411-1417) using the pointer (205) corresponding to the remote control device (200), the display device (100) can search for the recommended keyword selected by the user through a specific application.

The display device (100) can include a sentence (1420) related to the suggestion of recommended keywords in the second screen (1400). The sentence (1420) related to the suggestion of recommended keywords can be generated based on the sentence structure corresponding to the associated keyword received from the server (600). The display device (100) can generate the sentence (1420) related to the suggestion of recommended keywords based on the input keyword 'Common Siblings' and the sentence structure corresponding to the associated keyword included in the second keyword.

When the user presses a specific button included in the user input unit (430) of the remote control device (200) while the second screen (1400) is displayed on the display (180), the display device (100) can output a third screen (1500) including recommended keywords corresponding to a specific application. For example, the display device (100) can receive from the server (600) a second keyword including popular keywords, which are high-frequency words uttered by users in relation to a specific application.

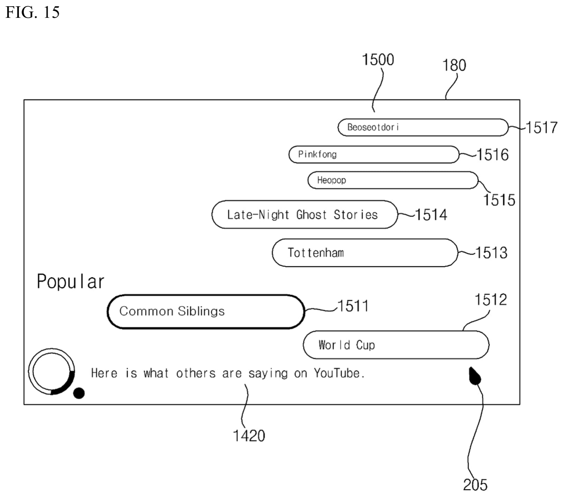

Referring to FIG. 15, the second screen (1400) may include at least one recommended keyword corresponding to popular keywords. For example, if the specific application is 'YouTube', the display device (100) can determine 'Common Siblings' (1511), 'World Cup' (1512), 'Tottenham' (1513), 'Midnight Horror Story' (1514), 'Heopop' (1515), 'Pinkfong' (1516), and 'Mushroom Boy' (1517), which are high-frequency words uttered by users in relation to the specific application 'YouTube' included in the second keyword, as respective recommended keywords.

When the user selects one of the recommended keywords corresponding to the popular keywords (1511-1517) using the pointer (205) corresponding to the remote control device (200), the display device (100) can search for the recommended keyword selected by the user among (1511-1517) through a specific application.

The display device (100) can include a sentence (1520) related to the suggestion of recommended keywords in the third screen (1500). The sentence (1520) related to the suggestion of recommended keywords can be generated based on the sentence structure corresponding to popular keywords received from the server (600). The display device (100) can generate the sentence (1520) related to the suggestion of recommended keywords based on the specific application 'YouTube' and the sentence structure corresponding to popular keywords included in the second keyword.

When the user presses a specific button included in the user input unit (430) of the remote control device (200) while the third screen (1500) is displayed on the display (180), the display device (100) can output a fourth screen (1600) including recommended keywords corresponding to functions and applications. For example, the display device (100) may include a database of functions and/or applications related to a specific genre. For example, if the first keyword includes 'children' as an associated keyword, the display device (100) can receive from the server (600) a second keyword including words representing functions and/or applications related to 'children'.

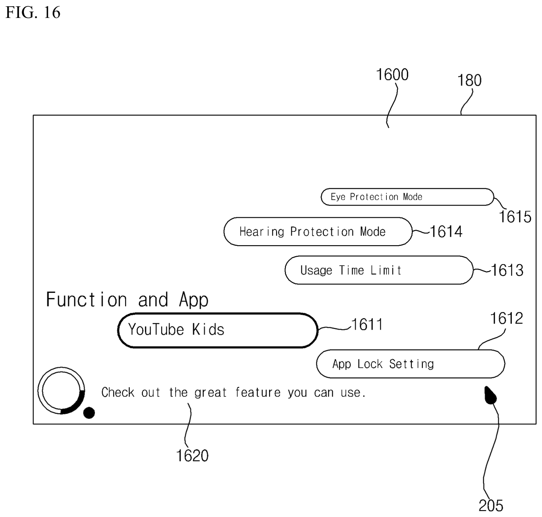

Referring to FIG. 16, the fourth screen (1600) may include at least one recommended keyword corresponding to a function and/or an application. For example, if the associated keyword included in the first keyword is 'children', the display device (100) can determine 'YouTube Kids' (1611), 'Set App Lock' (1612), 'Limit Usage Time' (1613), 'Hearing Protection Mode' (1614), and 'Eye Protection Mode' (1615), which are words representing functions and/or applications related to 'children' included in the second keyword, as respective recommended keywords.

When the user selects one of the recommended keywords corresponding to functions and/or applications (1611-1615) using the pointer (205) corresponding to the remote control device (200), the display device (100) can execute the function and/or application corresponding to the recommended keyword selected by the user among (1611-1615).

The display device (100) can include a sentence (1620) related to the suggestion of recommended keywords in the fourth screen (1600). The sentence (1620) related to the suggestion of recommended keywords can be generated based on the sentence structure corresponding to functions and applications received from the server (600). The display device (100) can generate the sentence (1620) related to the suggestion of recommended keywords based on the sentence structure corresponding to functions and applications.

According to one embodiment, the display device (100) can output at least one recommended keyword corresponding to a function related to a specific application. For example, when the display device (100) transmits data representing a specific application along with the first keyword to the server (600), the display device (100) can receive words representing functions and/or tips related to the specific application from the server (600). In this case, the display device (100) can determine the words representing functions and/or tips related to the specific application as recommended keywords. For example, if the specific application is related to exercise, the server (600) can transmit a second keyword including 'Show me exercise info', 'Set 3-minute timer', 'Tell me a cardio program', etc., to the display device (100).

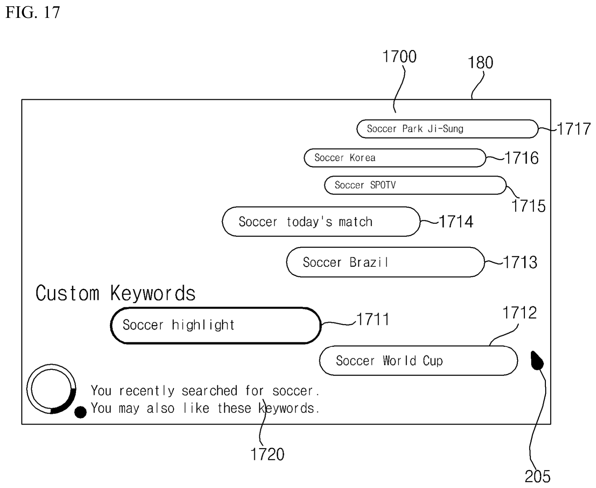

Meanwhile, referring to FIG. 17, when the search criterion is set to the second criterion, 'soccer' may be included in the first keyword according to the latest keyword. At this time, the server (600) can transmit a second keyword including words that have a history of being uttered together with 'soccer' to the display device (100).

The display device (100) can output a fifth screen (1700) including recommended keywords corresponding to the user's usage history. The fifth screen (1700) may include at least one recommended keyword corresponding to the input keyword included in the first keyword. For example, if the input keyword included in the first keyword is 'soccer', and the words included in the second keyword are 'highlights', 'World Cup', 'Brazil', 'today's match', 'SPOTV', 'South Korea', and 'Park Ji-sung', the display device (100) can determine 'soccer highlights' (1711), 'soccer World Cup' (1712), 'soccer Brazil' (1713), 'soccer today's match' (1714), 'soccer SPOTV' (1715), 'soccer South Korea' (1716), and 'soccer Park Ji-sung' (1717) as respective recommended keywords.

When the user selects one of the recommended keywords corresponding to the input keyword (1711-1717) using the pointer (205) corresponding to the remote control device (200), the display device (100) can search for the recommended keyword selected by the user among (1711-1717) through a specific application.

The display device (100) can include a sentence (1720) related to the suggestion of recommended keywords in the fifth screen (1700). The sentence (1720) related to the suggestion of recommended keywords can be generated based on the sentence structure corresponding to the input keyword received from the server (600). The display device (100) can generate the sentence (1720) related to the suggestion of recommended keywords based on the input keyword 'soccer' and the sentence structure included in the second keyword.

When the user presses a specific button included in the user input unit (430) of the remote control device (200) while the fifth screen (1700) is displayed on the display (180), the display device (100) can output a sixth screen (1800) including recommended keywords corresponding to the user's usage history. For example, the display device (100) can receive from the server (600) a second keyword including words that have a history of being uttered in relation to a specific genre 'sports (soccer)'.

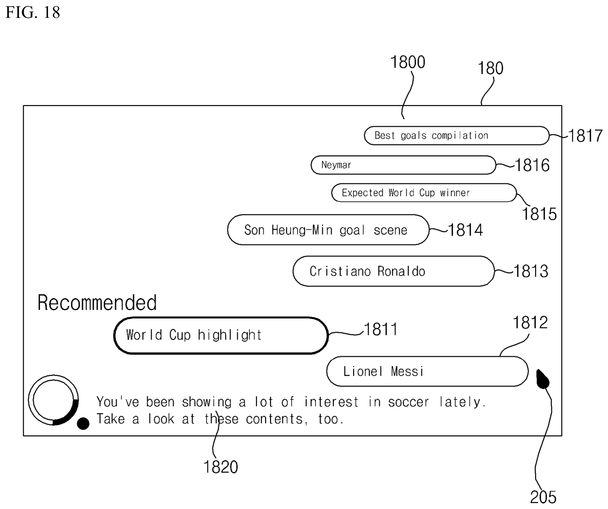

Referring to FIG. 18, the sixth screen (1800) may include at least one recommended keyword corresponding to the associated keyword included in the first keyword. For example, if the associated keyword included in the first keyword is 'sports (soccer)', the display device (100), based on the words with a history of being uttered in relation to the specific genre 'sports (soccer)', can determine 'World Cup highlights' (1811), 'Lionel Messi' (1812), 'Cristiano Ronaldo' (1813), 'Son Heung-min goal scenes' (1814), 'World Cup winner predictions' (1815), 'Neymar' (1816), and 'Best goals compilation' (1817) as respective recommended keywords.

When the user selects one of the recommended keywords corresponding to the associated keyword (1811-1817) using the pointer (205) corresponding to the remote control device (200), the display device (100) can search for the recommended keyword selected by the user through a specific application.

The display device (100) can include a sentence (1820) related to the suggestion of recommended keywords in the sixth screen (1800). The sentence (1820) related to the suggestion of recommended keywords can be generated based on the sentence structure corresponding to the associated keyword included in the second keyword. The display device (100) can generate the sentence (1820) related to the suggestion of recommended keywords based on the input keyword 'soccer' and the sentence structure corresponding to the associated keyword included in the second keyword.

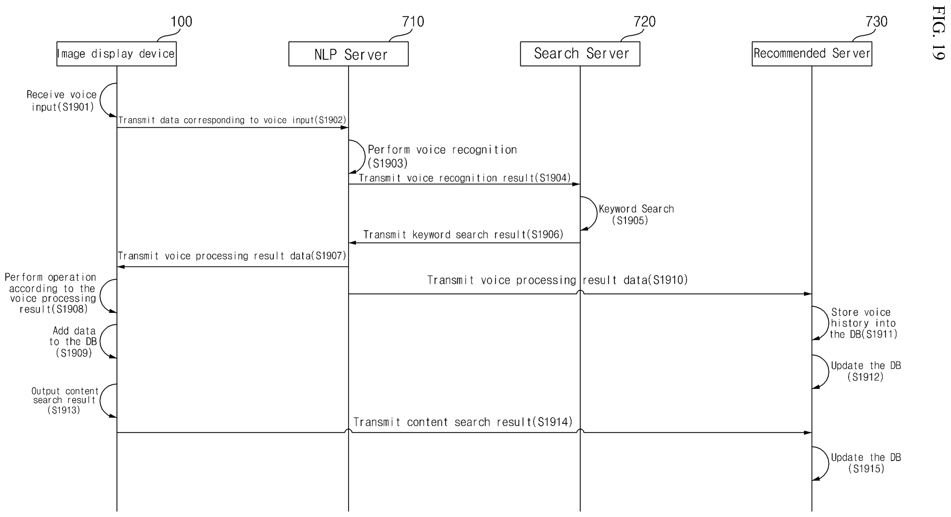

FIG. 19 is a flowchart illustrating an operating method of a system according to an embodiment of the present disclosure. For content that overlaps with the descriptions in FIGS. 6 to 18, a detailed explanation will be omitted.

Referring to FIG. 19, in operation S1901, the display device (100) can receive a voice input.

In operation S1902, the display device (100) can transmit data corresponding to the voice input to the NLP server (710).

In operation S1903, the NLP server (710) can perform voice recognition on the data corresponding to the voice input received from the display device (100). For example, the NLP server (710) can convert audio data corresponding to the voice input into text. At this time, the NLP server (710) can extract words included in the voice input from the converted text.

In operation S1904, the NLP server (710) can transmit data regarding the result of performing the voice recognition to the search server (720). The data regarding the result of performing the voice recognition may include words extracted from the data corresponding to the voice input.

In operation S1905, the search server (720) can search for keywords corresponding to the words included in the data regarding the result of the voice recognition received from the NLP server (710). The search server (720) can search for the words extracted from the data corresponding to the voice input and information related to the extracted words in the data included in the search DB (721). For example, if the words extracted from the data corresponding to the voice input are 'YouTube', 'Baby Shark', and 'search', the search server (720) can search for 'YouTube', 'Baby Shark', and 'search' respectively in the data included in the search DB (721).

In operation S1906, the search server (720) can transmit the result of searching for the keywords to the NLP server (710). For example, if the words extracted from the data corresponding to the voice input are 'YouTube', 'Baby Shark', and 'search', the keywords searched in the search DB (721) may include 'YouTube' as the application related to 'YouTube', 'title' as the type of 'Baby Shark', 'children' as the genre of 'Baby Shark', and 'search function' as the function related to 'search'.

In operation S1907, the NLP server (710) can transmit voice processing result data to the display device (100). For example, the voice processing result data may include 'YouTube', 'Baby Shark', 'search', 'YouTube' as the application related to 'YouTube', 'title' as the type of 'Baby Shark', 'children' as the genre of 'Baby Shark', and 'search function' as the function related to 'search'.

In operation S1908, the display device (100) can perform an operation according to the result of processing the voice input. For example, based on the fact that the voice processing result data includes 'title' indicating the name of a specific content and 'search function' indicating a specific function, it can perform a search operation for 'Baby Shark'. At this time, the display device (100), based on the fact that the voice processing result data includes 'YouTube' indicating a specific application, can execute the application 'YouTube' and then perform the search operation for 'Baby Shark'.

In operation S1909, the display device (100) can add data corresponding to the voice to the database stored in the storage unit (140). The display device (100) can add the data corresponding to the voice, which includes at least one of an input keyword and an associated keyword and a voice time point, to the database corresponding to the application related to the received voice input.

Meanwhile, in operation S1910, the NLP server (710) can transmit the voice processing result data to the recommendation server (730).

In operation S1911, the recommendation server (730), based on the voice processing result data received from the NLP server (710), can store the history of processing the voice input (hereinafter, voice history) in the voice history DB (731). For example, the recommendation server (730) can add a voice history including at least one of an input keyword and an associated keyword to the voice history DB (731). According to one embodiment, the voice history may be classified and stored in the voice history DB (731) according to the date the voice input was processed, the country where the display device (100) that transmitted the data corresponding to the voice input is located, the application related to the voice input, etc. For example, the voice history related to the OTT service 'YouTube' and the voice history related to 'Netflix' can be stored separately.

In operation S1912, the recommendation server (730) can update at least one database. For example, the recommendation server (730), based on the data included in the voice history DB (731), can update the App-specific DB (735). This will be described with reference to FIG. 20.

Referring to FIG. 20, the recommendation server (730) can manage the voice histories stored in the voice history DB (731) by classifying them for each keyword (2010). The recommendation server (730) can determine that voice histories in which a specific word is identically included as an input keyword are voice histories related to that specific keyword. For example, the recommendation server (730) can distinguish between voice histories that include 'Squid Game' as at least part of the input keyword and voice histories that include 'Pororo' as at least part of the input keyword, among the voice histories stored in the voice history DB (731).

The recommendation server (730) can classify the words included in the voice history into keywords and tags (2020). For example, if the recommendation server (730) determines a specific word included in the voice history as a keyword, it can determine a word uttered together with the specific word as a tag.

According to one embodiment, the recommendation server (730) can remove a voice history containing a pre-set prohibited word from the voice history DB (731). For example, the prohibited words may include slang, profanity, inappropriate sexual expressions, etc.

The recommendation server (730) can perform normalization on the words included in the voice history. The recommendation server (730) can perform normalization on the words based on spaces between words, whether they are characters without any meaning, whether they are foreign words, etc. For example, the voice input DB (731) may store voice histories that identically include 'Baby Shark' (with a space) as an input keyword and voice histories that identically include 'BabyShark' (without a space). In this case, the recommendation server (730), based on the space between words, can determine that 'Baby Shark' and 'BabyShark' are the same word. For example, the voice input DB (731) may store voice histories that identically include ' 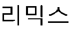 ' (remix in Korean) as an input keyword and voice histories that identically include 'Remix'. In this case, the recommendation server (730), based on whether it is a foreign word, can determine that ' 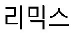 ' and 'remix' are the same word.

The recommendation server (730), based on the result of performing normalization on the input keyword, can generate a usage history related to a specific keyword (2030). For example, the recommendation server (730) can generate a usage history related to 'Baby Shark' that includes 'Baby Shark' as a keyword and words uttered together with 'Baby Shark' as tags. The recommendation server (730) can store the usage history related to a specific keyword in the App-specific DB (735). For example, if the usage history related to 'Baby Shark' was generated based on voice histories related to a specific application 'YouTube' among the voice histories stored in the voice history DB (731), the recommendation server (730) can add the usage history related to 'Baby Shark' to the database corresponding to 'YouTube' among the databases stored in the App-specific DB (735).

Therefore, when a first keyword including 'Baby Shark' is received from the display device (100), the recommendation server (730) can include at least one of the tags included in the usage history related to 'Baby Shark' stored in the App-specific DB (735) in the second keyword. In this case, the recommendation server (730) can determine a predetermined number of tags in descending order of the frequency of being uttered together with 'Baby Shark'.

According to one embodiment, the recommendation server (730), based on the voice histories stored for each keyword in the voice history DB (731), can determine popular keywords. For example, the recommendation server (730) can determine a predetermined number of keywords in descending order of the frequency of being uttered by users in relation to a specific application 'YouTube' as popular keywords related to 'YouTube'.

Meanwhile, in operation S1913, the display device (100) can search for content using an OTT service that provides content. The display device (100) can output, via the display (180), the result of searching for content according to a search target composed of at least one word (hereinafter, search keyword). For example, the display device (100) can use a specific application 'YouTube' to search for content related to the search keyword 'World Cup' and output the result via the display (180).

In operation S1914, the display device (100) can transmit data regarding the result of searching for content to the recommendation server (730). The data regarding the result of searching for content may include an identifier for the display device (100), an identifier for the application used for the content search, the search keyword, the titles of the content searched according to the search keyword, the names of the channels providing the searched content, etc. For example, the data regarding the result of searching for content may include information on a predetermined number (e.g., 50) of content items.

According to one embodiment, if the result of searching for content includes at least a predetermined number of search results corresponding to a specific channel, the display device (100) can transmit data regarding the result of searching for content to the recommendation server (730). For example, the display device (100) can determine whether at least 30 search results corresponding to a specific channel are included among 50 search results included in the result of searching for content. Meanwhile, the display device (100) may also transmit data regarding the result of searching for content to the recommendation server (730) based on whether the search results corresponding to a specific channel are included at a predetermined ratio or more in the result of searching for content. For example, it can determine whether at least 60% of the search results corresponding to a specific channel are included among 50 search results.

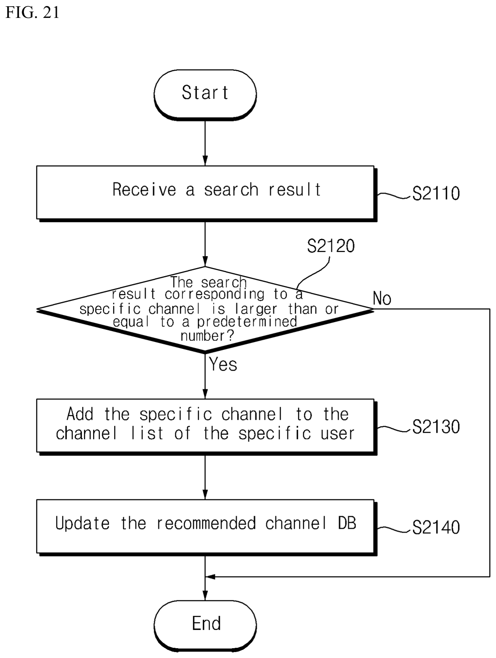

In operation S1915, the recommendation server (730), based on the data regarding the result of searching for content received from the display device (100), can update the database. For example, the recommendation server (730), based on the result of searching for content using a specific application 'YouTube', can update the database corresponding to 'YouTube' among the databases included in the App-specific DB (735). This will be described with reference to FIG. 21.

Referring to FIG. 21, in operation S2110, the recommendation server (730) can receive data regarding the result of searching for content from the display device (100).

In operation S2120, the recommendation server (730) can determine whether at least a predetermined number of search results corresponding to a specific channel are included in the data regarding the result of searching for content. For example, the recommendation server (730) can determine whether at least 30 search results corresponding to a specific channel are included among 50 search results included in the data. Meanwhile, the recommendation server (730) may also determine whether the search results corresponding to a specific channel are included at a predetermined ratio (e.g., 60%) or more.

In operation S2130, if at least a predetermined number of search results corresponding to a specific channel are included in the data regarding the result of searching for content, the recommendation server (730) can add the specific channel to the channel list of the specific user corresponding to the display device (100). That is, if the search results corresponding to a specific channel are included at a certain level or more in the result of searching for content, considering that the user of the display device (100) is highly likely to select the search results corresponding to the specific channel, the recommendation server (730) can add the specific channel to the user's channel list. For example, the recommendation server (730) can add the search keyword used for the content search and the name of the specific channel mapped to the search keyword to the specific user's channel list. At this time, the channel list can be managed separately for each application.

In operation S2140, the recommendation server (730), based on the channel list, can update a database related to channel recommendation (hereinafter, recommended channel DB) among the databases included in the App-specific DB (735). For example, when a first keyword including an input keyword is received from the display device (100), the recommendation server (730), based on the recommended channel DB, can include the channel corresponding to the input keyword included in the first keyword in the second keyword.

Referring to FIG. 22, the recommendation server (730) can manage a channel list for each user (2210). The channel list may include the search keyword used for the content search and the name of the specific channel corresponding to the search keyword. The channel list can be classified by country where the display device (100) that transmitted the content search result is located. The channel list can be classified by the application used for the content search.

According to one embodiment, the channel list may further include the genre of a specific channel. For example, the recommendation server (730) can transmit the name of a specific channel, 'Pororo', to the search server (720). At this time, the recommendation server (730) can map the genre 'children' of 'Pororo' received from the search server (720) to the channel name 'Pororo' and include it in the channel list.

The recommendation server (730), based on the channel list for each user, can update the recommended channel DB (2220). The recommended channel DB may include a keyword, the name of a specific channel corresponding to the keyword, the genre of the specific channel, the names of channels associated with the specific channel, etc. The recommendation server (730) can identify the names of channels commonly included in the channel lists for each user (hereinafter, common channels). For example, if a specific channel name is commonly included in at least a predetermined number (e.g., 100) of channel lists, the recommendation server (730) can determine that channel name as a common channel name.

The recommendation server (730) can determine at least one of the channels included in the user's channel list along with the common channel name as a channel associated with the common channel (hereinafter, associated channel). For example, among the channels included in the user's channel list along with the common channel name, the recommendation server (730) can determine a channel corresponding to the same genre as the common channel's genre as an associated channel.

The recommendation server (730) can include the common channel name, at least one keyword corresponding to the common channel, and/or at least one associated channel corresponding to the common channel in the recommended channel DB. The recommendation server (730), based on the recommended channel DB, can include the common channel and/or the associated channel in the second keyword. For example, the recommendation server (730) can include the common channel corresponding to the input keyword included in the first keyword in the second keyword. For example, the recommendation server (730) can include the common channel and/or the associated channel corresponding to the associated keyword included in the first keyword in the second keyword.

As described above, according to various embodiments of the present disclosure, it is possible to more quickly and accurately recommend keywords for content that a user is highly likely to prefer, based on the user's usage history, without concerns about personal information leakage.

Furthermore, according to various embodiments of the present disclosure, it is possible to recommend keywords optimized for each of a plurality of applications.

Furthermore, according to various embodiments of the present disclosure, it is possible to recommend keywords optimized for a user by using the results of searching for content based on a keyword.

Furthermore, according to various embodiments of the present disclosure, it is possible to recommend keywords optimized for a user by considering the association between channels that provide content.

The attached drawings are only for facilitating easy understanding of the embodiments disclosed in this specification, and it should not be construed that the technical ideas disclosed in this specification are limited by the attached drawings, and it should be understood that they include all changes, equivalents, and substitutes included in the spirit and technical scope of the present disclosure.

Meanwhile, the operating method of the display device of the present disclosure can be implemented as a processor-readable code on a processor-readable recording medium provided in the display device. The processor-readable recording medium includes all kinds of recording devices that store data that can be read by a processor. Examples of the processor-readable recording medium include ROM, RAM, CD-ROM, magnetic tapes, floppy disks, optical data storage devices, etc., and also include implementation in the form of a carrier wave, such as transmission over the Internet. In addition, the processor-readable recording medium can be distributed in a computer system connected via a network, and a processor-readable code can be stored and executed in a distributed manner.

Furthermore, although the preferred embodiments of the present disclosure have been illustrated and described above, the present disclosure is not limited to the specific embodiments described above, and it is a matter of course that various modified embodiments can be made by a person with ordinary skill in the technical field to which the invention belongs without departing from the gist of the present disclosure claimed in the claims, and these modified embodiments should not be understood individually from the technical ideas or prospects of the present disclosure.

## Claims

1. A **display device,** comprising:
a display;
a network interface unit configured to perform communication with at least one server;
a memory configured to store at least one database; and
a controller configured to:
transmit, to the server via the network interface unit, data regarding a result of a search for content according to a specific keyword through a specific application;
based on receiving a predetermined input related to the specific application, transmit a first keyword, extracted from data included in a database corresponding to the specific application, to the server via the network interface unit; and
based on receiving a second keyword associated with the first keyword from the server via the network interface unit, output, via the display, a screen comprising at least one recommended keyword corresponding to the received second keyword,
wherein the result of the search for the content comprises at least one first channel that provides content items found according to the specific keyword, and
wherein, when the first keyword comprises the specific keyword, the second keyword comprises an identifier of at least one of the at least one first channel.

2. The **display device** of claim 1, wherein the data regarding the result of the search for the content comprises an identifier for the **display device,** an identifier for the specific application, the specific keyword, and a name of the at least one first channel.

3. The **display device** of claim 1, wherein the second keyword further comprises an identifier of at least one second channel having a same genre as one of the at least one first channel comprised in the second keyword.

4. The **display device** of claim 1, wherein the controller is further configured to transmit the data regarding the result of the search for the content to the server via the network interface unit only when the result of the search for the content includes at least a predetermined number of content items from a specific channel.

5. The **display device** of claim 1, wherein the controller is further configured to transmit the data regarding the result of the search for the content to the server via the network interface unit when the content items corresponding to the specific keyword are searched through the specific application based on receiving a voice input comprising the specific keyword.

6. The **display device** of claim 1, wherein the controller is further configured to:
determine at least one data item corresponding to a time of reception of the predetermined input from the database corresponding to the specific application; and
determine the first keyword based on the determined at least one data item.

7. An operating method of a **display device,** the method comprising:
transmitting, to a server, data regarding a result of a search for content corresponding to a specific keyword through a specific application;
based on receiving a predetermined input related to the specific application, transmitting a first keyword, extracted from data included in a database corresponding to the specific application, to the server; and
based on receiving at least one second keyword associated with the first keyword from the server, outputting a screen comprising at least one recommended keyword corresponding to the received second keyword,
wherein the result of the search for the content comprises at least one first channel that provides content items found according to the specific keyword, and
wherein, when the first keyword comprises the specific keyword, the second keyword comprises an identifier of at least one of the at least one first channel.

8. The operating method of claim 7, wherein the data regarding the result of the search for the content comprises an identifier for the **display device,** an identifier for the specific application, the specific keyword, and a name of the at least one first channel.

9. The operating method of claim 7, wherein the second keyword further comprises an identifier of at least one second channel having a same genre as one of the at least one first channel comprised in the second keyword.

10. The operating method of claim 7, wherein the transmitting of the data regarding the result of the search for the content to the server comprises: transmitting the data regarding the result of the search for the content to the server only when the result of the search for the content includes at least a predetermined number of content items from a specific channel.

11. The operating method of claim 7, wherein the transmitting of the data regarding the result of the search for the content to the server comprises: transmitting the data regarding the result of the search for the content to the server when the content items corresponding to the specific keyword are searched through the specific application based on receiving a voice input comprising the specific keyword.

12. The operating method of claim 7, wherein the transmitting of the first keyword to the server comprises:
determining at least one data item corresponding to a time of reception of the predetermined input from the database corresponding to the specific application; and
determining the first keyword based on the determined at least one data item.
